(19) Europäisches Patentamt
European Patent Office
Office européen des brevets

(11) EP 0 676 070 B1

(12) **EUROPÄISCHE PATENTSCHRIFT**

(45) Veröffentlichungstag und Bekanntmachung des Hinweises auf die Patenterteilung:
23.04.1997 Patentblatt 1997/17

(51) Int Cl.$^6$: **G06F 17/10**, G07C 3/00, G01M 7/02

(21) Anmeldenummer: 94904599.1

(22) Anmeldetag: 23.12.1993

(86) Internationale Anmeldenummer:
PCT/EP93/03674

(87) Internationale Veröffentlichungsnummer:
WO 94/15268 (07.07.1994 Gazette 1994/15)

(54) **VERFAHREN UND EINRICHTUNG ZUR SIGNALANALYSE, PROZESSIDENTIFIKATION UND ÜBERWACHUNG EINES TECHNISCHEN PROZESSES**

METHOD AND DEVICE FOR SIGNAL ANALYSIS, PROCESS IDENTIFICATION AND MONITORING OF A TECHNICAL PROCESS

PROCEDE ET DISPOSITIF PERMETTANT D'ANALYSER DES SIGNAUX, IDENTIFICATION DE PROCESSUS ET CONTROLE D'UN PROCESSUS TECHNIQUE

(84) Benannte Vertragsstaaten:
BE CH DE DK FR GB IT LI NL SE

(30) Priorität: 23.12.1992 DE 4243882

(43) Veröffentlichungstag der Anmeldung:
11.10.1995 Patentblatt 1995/41

(73) Patentinhaber: BALEANU, Michael-Alin
D-85748 Garching (DE)

(72) Erfinder: BALEANU, Michael-Alin
D-85748 Garching (DE)

(74) Vertreter: Thiel, Christian, Dr. Dipl.-Chem.
Schaeferstrasse 18
44623 Herne (DE)

(56) Entgegenhaltungen:
DE-A- 3 133 222          DE-A- 3 725 123
US-A- 5 099 436

- INTERNATIONAL JOURNAL OF BIOMEDICAL COMPUTING, ELSEVIER SCIENTIFIC PUBLISHERS Bd. 33, Nr. 1 , Juli 1993 , SHANNON, CO. CLARE, IRL Seiten 1 - 23 XP000397977 AMY M. FUREY ET AL 'A PC PROGRAM TO AID IN THE CHOICE OF THE DESIGN MATRIX IN MULTIPLE LINEAR REGRESSION'
- NTIS FOREIGN TECHNOLOGY SERIES, US DEPARTMENT OF COMMERCE Bd. PB82, Nr. 9707 , 1982 'REGPAC A STATISTICAL REGRESSION PACKAGE'
- IEEE TRANSACTIONS ON INFORMATION THEORY Bd. 38, Nr. 4 , Juli 1992 , NEW YORK US Seiten 1323 - 1338 XP000287141 A.KRZYZAK 'GLOBAL CONVERGENCE OF THE RECURSIVE KERNEL REGRESSION ESTIMATES WITH APPLICATIONS IN CLASSIFICATION AND NONLINEAR SYSTEM ESTIMATION'
- PROCEEDINGS OF THE 1991 IEEE INTERNATIONAL SYMPOSIUM ON INFORMATION THEORY, IEEE PRESS NEW YORK US Juni 1991 , BUDAPEST, HUNGARY Seite 161 XP000365548 M.PAWLAK ET AL 'ON NON PARAMETRIC ESTIMATION OF A CASCADE NONLINEAR SYSTEM BY THE KERNEL REGRESSION ESTIMATE'
- PROCEEDINGS OF ICASSP 92, IEEE PRESS NEW YORK US Bd. 5 , März 1992 , SAN FRANSISCO US Seiten 529 - 532 XP000341475 A.SPANIAS ET AL 'BLOCK TIME AND FREQUENCY DOMAIN MODIFIED COVARIANCE ALGORITHMS'

- INTERNATIONAL JOINT CONFERENCE ON NEURAL NETWORKS, IEEE PRESS NEW YORK US Bd. 1 , Juli 1991 , SEATTLE, US Seiten 79 - 84 XP000238272 V.CHERKASSKY ET AL 'SELF-ORGANIZING NETWORK FOR REGRESSION: EFFICIENT IMPLEMENTATION AND COMPARATIVE EVALUATION'

- PROCEEDINGS OF IEEE CONFERENCE ON INSTRUMENTATION AND MEASUREMENT TECHNOLOGY Mai 1991 , ATLANTA, US Seiten 315 - 318 XP000295361 RISTO SUORANTA ET AL 'UTILIZING MULTIVARIATE AUTOREGRESSIVE MODEL TO REVEAL INTERNAL DEPENDECIES IN MULTICHANNEL MEASUREMENT DATA'

**Beschreibung**

**Technisches Gebiet**

In der Signalanalyse wird ein zu analysierendes Signal y(t) in einer (endlichen) Reihe von Zeit-Funktionen (z. B. Fourier-Transformation) entwickelt, oder als eine lineare Kombination verschiedener gemessener oder vorgegebener Anregungs- oder Zusatzfunktionen (z. B. autoregressive modelling, multiple Regression) ausgedrückt:

$$y(t) = \vec{B}(\vec{p}) \bullet \vec{x}(t) + \varepsilon \qquad (1)$$

$y(t) =$ abhängige Variable (das zu analysierende Zeitsignal)

$\vec{x}(t) =$ Vektor der unabhängigen Variablen, Regressoren (Dimension N)

$\vec{B}(\vec{p}) =$ Koeffizienten-Vektor (Dimension N)

$\vec{p} =$ Parameter -Vektor (Dimension M)

$\varepsilon =$ Fehler

Der Parameter-Vektor $\vec{p}$ beschreibt die "betrieblichen" Einflüsse (z. B. hängt der drehfrequente Anteil einer Lagerbockschwingung einer Turbine von der Wirkleistung ab).

Ziel der Signalanalyse (1) ist die möglichst vollständige Beschreibung der Zeitabhängigkeit von y(t) unter bestimmten Betriebsbedingungen. Die Betriebsabhängigkeiten der Koeffizienten $\vec{B}$ werden in der Signalanalyse meistens nicht berücksichtigt.

In vielen technischen Bereichen wird das dynamische Verhalten eines Systems oder eines Prozesses durch S Gleichungen des Typs (1) beschrieben:

$$\vec{y}(t) = A(\vec{p}) \bullet \vec{x}(t) + \vec{\varepsilon} \qquad (2)$$

Dabei bedeuten im Einzelnen:

$\vec{x}(t) =$ Anregungs- oder Eingangsvektor (Dimension N), Regressoren

$\vec{y}(t) =$ Vektor der abhängigen Ausgangssignale ( Dimension S)

$A(\vec{p}) =$ Systemmatrix ( Dimension N * S)

Solche Problemstellungen trifft man in der Chemie, Regelungstechnik, Modalanalyse, usw. Die Gleichungen (2) ergeben sich aus theoretischen Überlegungen. Der Vergleich mit der Praxis führt zu Korrekturen der Elemente der Systemmatrix, da z. B. fertigungsbedingte Toleranzen zu Abweichungen vom theoretisch erwarteten Wert führen.

Dabei werden die Koeffizienten in (1) oder (2) mittels der Methode der kleinsten Quadrate aus experimentell ermittelten Daten berechnet. Ein Sonderfall der Anwendung der Methode der kleinsten Quadrate ist die Fourier-Transformation, da hierbei die unabhängigen Funktionen in (1) orthogonal zueinander sind. Die Orthogonalität der unabhängigen Funktionen erlaubt die Entwicklung einfacher Verfahren zur Berechnung der diskreten Fourier-Transformation mittels spezieller FFT-Koprozessoren. Für den allgemeinen Fall nichtorthogonaler Funktionen - z. B. multiple Regression, autoregresive modelling - wurden keine Prozessoren entwickelt, aufgrund der bestehenden numerischen und nicht zuletzt methodischer Schwierigkeiten.

Eine der Hauptanwendungen der Gleichungen (1) und (2) ist die System- oder Prozeßüberwachung zwecks einer Schadensfrüherkennung. Dabei werden als Schadensfrühindikator entweder die Abweichungen der gemessenen Ausgangssignale von der Modellvorhersage oder die Änderungen der Modellkoeffizienten in (1) oder (2) benutzt.

**Stand der Technik**

Die Überwachungsaufgabe eines technischen Prozesses beinhaltet eine Reihe von Teilaufgaben:

- Signalanalyse, Signalvalidierung

- System- / Prozeßidentifikation (mit Lemen des Modells über verschiedene Betriebszustände) um auf

  - betriebliche (z. B. durch Regelung) oder stochastische Störungen
  - Anomalien im Prozeßablauf/Systemverhalten (Diagnose, Schadensdiagnose)

zu antworten.Die mathematische Behandlung einer jeden Teilaufgabe kann auf die Form (1) oder (2) zurückgeführt werden. Der Stand der Technik wird anhand der Problematik der System-/Prozeßidentifikation bei der Schwingungsüberwachung erläutert.

Eine Standardschwingungsüberwachung von rotierenden Bauteilen (z. B. Pumpen- oder Turbinenwellen) beschränkt sich auf die Überwachung des Effektiv- oder Spitzenwertes eines Schwingsignals.

Eine wesentlich verfeinerte Schwingungsinformation erhält man durch frequenzselektive Verfahren. Dabei überwacht man üblicherweise die Amplitude, Frequenzlage und/oder Phasenlage (im folgenden Überwachungsfunktionen y genannt) einer deterministischen oder stochastischen Systemresonanz.

Das Problem, das bei dieser Art der Überwachung auftritt, ist die starke Abhängigkeit dieser Überwachungsfunktionen von dem jeweiligen Lastzustand der Maschine. Die relativen Positionen der Maschinenbauteile beeinflussen zusätzlich die Steifigkeits- und Dämpfungskoeffizienten der betrachteten mechanischen Struktur (insbesondere bei gleitgelagerten Wellen der Abstand Welle - Lagerbock).

Um diesem Tatbestand gerecht zu werden, wurden viele Versuche unternommen, das Verhalten der Überwachungsfunktionen y phänomenologisch anhand der vorhandenen Betriebsparameter $\vec{x}$ (z. B. Wirk- und Blindleistung im Falle einer Turbine) zu beschreiben.

Eine übliche Art ist die Einführung von Klassen im Betriebsparameterraum. Dabei werden für jede Klasse und überwachte Systemresonanz statistische Kennwerte für die Überwachungsfunktionen gebildet und anhand dieser Kennwerte wird überprüft, ob die Überwachungsvariablen klassenspezifische zulässige Grenzen überschreiten.

Der Nachteil dieser Verfahren, ist die, mit der Zahl der Parameter und mit der Zahl der für einen Parameter gewählten Bereiche, schnell wachsende Klassenzahl. Da auch die Grenzwerte klassenspezifisch sind, führt dies schnell zur Unübersichtlichkeit, selbst für den Schwingungsexperten.

Eine analytische Lösung bietet sich durch die Anwendung der multiplen Regression bei der Bestimmung der Überwachungsfunktionen y als Funktion der gemessenen Parameter $\vec{x}$ ., im Folgenden Regressoren genannt.

Die bisherigen Versuche scheiterten aber bis jetzt einerseits an der unvollständigen Beschreibung des Prozesses und andererseits an der Instabilität der multiplen Regression in der Form, in der es bis jetzt angewendet wurde /1/,/2/. Aufgrund des großen Identifikations- und Rechenaufwandes ist die Zahl der im Modell aufgenommenen Parametervariablen gering und die Modellstruktur hängt sehr stark von der Erfahrung des Spezialisten ab /13/.

Dabei ist die unvollständige Beschreibung nicht als Fehlen wichtiger Parameter (diese können jederzeit mitgemessen werden), sondern als Nichtberücksichtigung mancher Parameterwerte oder -kombinationen zu verstehen. Die Stichprobe, die zum Lemen der Regressionskoeffizienten herangezogen wird, kann nicht alle im Betrieb auftauchenden Parameterwerte bzw. - kombinationen enthalten/13/, wodurch später u. U. erhebliche systematische Fehler auftauchen.

Dadurch ergibt sich die Notwendigkeit eines lemenden Systems zur Prozeßmodellierung. Die in der Literatur bekannten lemenden Regelkreise /3/, haben den Vorteil, beliebige nichtlineare Zusammenhänge durch einfache tabellarische Datenablage zu modellieren. Dem steht der große Speicherbedarf und die nicht parametrische Form des Modells gegenüber. Um im Bedarfsfall, eine bessere Schadensdiagnose zu erreichen, bedarf es aber einer parametrischen Form (1).

Zur unvollständigen Beschreibung trägt auch der lineare Ansatz bei, der, aus Gründen der Minimierung des Rechenaufwandes, immer wieder gemacht wird. Dabei sind aber die meisten technischen Abhängigkeiten nichtlinear, d. h. auch höhere Ordnungen einer Taylor-Reihenentwicklung, bzw. weitere, nichtlineare, funktionale Abhängigkeiten (z. B. das Produkt zweier Regressoren) müssen berücksichtigt werden.

Zur Instabilität dieses Verfahrens trägt die Überbestimmung, d. h. die Verwendung von an sich äquivalenten Regressoren bei der Beschreibung der funktionalen Parameterabhängigkeit (Gleichung 1) einer Überwachungsvariablen bei. Die multiple Regression liefert dann falsche Koeffizienten, die außerhalb der zur Koeffizientenbestimmung herangezogenen Stichprobe zu kaum reproduzierbaren Schätzwerten führen. Diese Instabilität ist in der Literatur als Multikollinearität, manchmal auch als Entartung /4/ bekannt und ist der Hauptgrund dafür, daß der Einsatz der multiplen Regression zur Schwingungsüberwachung (und zur Prozeßüberwachung allgemein) fast unmöglich war. Um die Überbestimmung aufzuheben, wurden verschiedene Verfahren zur Selektion der Modellvariablen $\vec{x}$ (Regressoren) entwickelt /12/. Sie haben alle den Nachteil, daß im Falle einer großen Anzahl von Regressoren numerische Instabilitäten auftreten.

Auch bei der in der Literatur zur multiplen Regression oft angegebenen schrittweisen Regression, wie z. B. /4/,/5/pp.307-313, die den Vorteil der **Auswahl signifikanter Parameterfunktionen** bietet, wird keine konsequente Überprüfung der Multikollinearität durchgeführt. Wie in der Literatur mehrfach ausgeführt /6/,/7/, ist der Test auf Multikollinearität eigentlich nur ein Test der numerischen Stabilität bei einer Matrixinversion, ohne die statistischen Eigenschaften des Datenmaterials zu berücksichtigen. Außerdem, finden die bekannten Effekte der Multikollinearität /8/,/9/ - Vorzeichenwechsel bzw. großer Wert eines Koeffizienten bei der Aufnahme eines neuen Regressors in das Modell - ebenfalls keine Beachtung /4/.

Die Berücksichtigung der stochastischen Natur der Regressoren $\vec{x}(t)$ findet in den sogenannten Modellen mit Fehler in den Variablen statt /10/, /11/. Dieser Ansatz ist mit der Ridge-Regression (z. B. /5/,pp. 313-325) verwandt, und führt zu einer konsistenten Schätzung der Regressions-Koeffizienten. Für größere N in Gl. (1), ist die letzte Methode aufgrund des Rechenaufwandes, bzw. der numerischen Instabilitäten nicht, oder nur bedingt zur Selektion der Regressorvariablen geeignet.

Demgegenüber bietet die schrittweise Regression eine kostengünstige Alternative durch geringe Rechenzeiten. Allerdings erhielt man bisher, durch diesen Algorithmus /4/,/5/pp.307-313, nur ein Regressionsmodell. Die so erhaltene Modelle waren für große N nur selten mit Modellen vergleichbar, die man mit anderen Selektions-Methoden erhält /12/,/5/pp. 312-313.

Die wichtigsten Verfahren zur Berechnung der multiplen Regression wurden in den verschiedensten Softwarepakete implementiert /14/, /15/. Diese, für eine interaktive Modellbildung gedacht, sind zur technischen Prozeßüberwachung nicht geeignet.Ausschlaggebend ist dabei die Erfahrung des jeweiligen Spezialisten. Übliche Rand bedingung ist eine vorgegebene Modellgröße.

In /15/ wird eine "rigorose Auswahl signifikanter Variablen" erwähnt. Beim Signifikanztest - egal wie rigoros er durchgeführt wird - wird nur geprüft, ob die neu einzuführende Variable ausreichend viel zur Erklärung der abhängigen Variable beiträgt. Wie aber vorhin erwähnt, ist das Ziel eines technisch einsetzbaren Verfahrens, die Ermittlung eines stabilen Regressionsmodells. Dabei ist der Kollinearitätstest (Toleranztest in /4/), und nicht der Signifikanztest das ausschlaggebende Kriterium.

Zusammenfassend kann gesagt werden, daß es z. Zt. kein Verfahren gibt, das alle kollinearitätsfreien Modelle, beliebiger Größe, und unter Berücksichtigung beliebiger(vom Benutzer vorzugebende) linearer und/oder nichtlinearer RegressorFunktionen, sowie beliebiger Änderungen der Regressor-Wertebereiche, in einer automatisch einsetzbaren Weise, für die Prozeßmodellierung , -überwachung , -steuerung oder -regelung, ermittelt.

## Aufgabe der Erfindung

Der Erfindung liegt die Aufgabe zugrunde, die Instabilität der Schätzwerte (Prädiktoren) der Überwachungsvariable y in (1) durch kollinearitätsfreie Regressionsmodelle zu vermeiden, wobei eine beliebige Zahl, beliebiger Regressorfunktionen berücksichtigt werden können. Dabei sollen im Signalanalyseteil, die Regressionskoeffizienten mittels der, in einem Prozessor implementierten Konsistenten, Erweiterten, Schnellen, Schrittweisen multiplen Regression(KESSR) in rekursiver Form berechnet werden, um Echtzeit-Anwendungen zu ermöglichen.

Bei der Überwachung, Steuerung oder Regelung wird das Problem der Ausreißer durch die von KESSR gelieferten Regressionsmodelle der Regressoren untereinander gelöst, indem Regressorwerte, die außerhalb der durch die Methoden der Statistik erhaltenen Vertrauensbereiche liegen, keine Berücksichtigung finden. Dies wird als Normalzustandsprüfung bezeichnet, und damit werden Fehlalarme bei Signalstörungen vermieden. Bei neu hinzukommenden Parameterbereichen, bzw. Parameterkombinationen hingegen, die aufgrund der Prozessdynamik und der Vorkenntnisse möglich sind(Normalzustand), bisher aber noch nicht erfaßt wurden, werden die Kovarianz- und Korrelationsmatrix, sowie die "besten" Q Modelle auf den letzten Stand gebracht (Lernen). Zusammen mit den beliebigen Regressorfunktionen, führt dies zur Minimierung der systematischen Schätzfehler.

Für die Prozeßüberwachung sollen hierbei vornehmlich die schadensbedingten Änderungen der Anlage oder des Prozesses erkannt werden. Dies geschieht einerseits über die zeitliche Entwicklung der Residuen bei Vergleich mit dem Referenzmodell, andererseits durch kontinuierliche Prozeßidentifikation (Kontroll-Modellbildung) mit KESSR, über die zeitliche Entwicklung der Regressionskoeffizienten, bzw. der Modelländerungen.

## Vorteilhafte Auswirkungen der Erfindung

Die Erfindung ist in Ansprüchen 1 und 8 definiert.

Das erfindungsgemäße Verfahren KESSR bietet den Vorteil langzeitstabiler Schätzwerte der Überwachungsvariable y in (1), d. h. man hat für diese Variable ein physikalisch belastbares Prozeßmodell gefunden.

Die Implementation des Verfahrens in einem Prozessor wird zur deutlichen Verbesserung der Signalanalyse (ähnlich wie bei den FFT-Prozessoren) führen. Dadurch, daß hier beliebige, nicht orthogonale Funktionen vorgegeben werden können (die allerdings in irgendeiner Weise mit dem untersuchten Prozeß zu tun haben müssen), kann die Modellordnung erheblich reduziert werden.(FFT-typischerweise 1024 Komponenten).Man erhält für eine Variable y mehrere, redundante und einfache analytische Prozeßmodelle mit typischerweise 2 bis 12 Komponenten. Damit lassen sich die verschiedenen Einflußfaktoren, die das Prozeßverhalten an einer bestimmten Stelle (z. B. in einem bestimmten Lager) der überwachten Maschine (Anlage) beschreiben, separieren und deren Bedeutung für den Prozeß besser beurteilen.

Dieses Verfahren kann auch zu einer wesentlichen Beschleunigung der Signalanalyse führen, wenn das Problem der schnellen Berechnung der Korrelationsmatrix mittels schneller Prozessoren gelöst wird. Für ein Prozeß-Überwachungssystem entschärft sich dieses Problem, da hier die Kovarianzmatrix nur für neue Werte der Regressoren oder Regressorkombinationen auf den neuesten Stand gebracht wird, d. h. es sind nur wenige Multiplikationen notwendig, und das sowohl für das Lernen als auch für die Kontroll-Modellbildung.

Als eine bedeutende Signalanalyse-Methode sei die "Autoregressive Modelling"-Methode erwähnt, die ebenfalls in der Form (1) geschrieben werden kann. Gegenüber der FFT hat sie den Vorteil, daß sie mit einem kleinen Datensatz arbeitet. Kurzfristige Änderungen des Signals lassen sich damit besser verfolgen. Durch das hier vorgestellte Verfahren, werden die Kriterien genannt, nach denen einzelne der zurückliegenden Abtastwerte des gleichen oder eines zusätzlich im Modell aufgenommenen Signals ausgewählt werden. Die Modellordnung hängt allein von den eingestellten Werten für den F-Test ab, und die Verwendung nichtkollinearer Funktionen garantiert die Stabilität des Modells.

Falls ein Prozeßmodell keine gaußverteilten Residuen liefert (d. h. kein gutes Modell), läßt sich sehr schnell feststellen, ob die Ordnung der nichtlinearen Funktionen zu klein ist, oder ob einfach weitere Parameter fehlen, die den Prozeß besser beschreiben. Dabei können komplizierte nichtlineare Polynomabhängigkeiten und auch Relaxationseffekte (wie z. B. thermische Ausgleichseffekte) sehr leicht getestet werden.

Die parallel zum Selbstlernen verlaufende Kontrolle der Modellbildung gibt eine Reihe von Diagnose-Zusatzhilfen:

- Bei Abweichungen vom gelernten Prozeßmodell gibt die Kontrollmodellbildung an, ob neue Einflußfaktoren hinzugekommen sind oder bereits im Modell vorhandene ihren Beitrag geändert haben oder weggefallen sind. Bei entsprechenden Prozeß- bzw. Anlagenstrukturkenntnissen wird dadurch eine erhöhte Diagnosesicherheit und -tiefe erreicht.

- Durch die Kontrollmodellbildung wird auch der Fall abgedeckt, bei dem gegenläufige Entwicklungen der Beiträge zweier oder mehrerer Einflußfaktoren die Überwachungsvariable unverändert lassen. Dadurch können schadensbedingte Änderungen erkannt und bewertet werden, lange bevor sie sich in den Überwachungsvariablen bemerkbar machen.

Die Wahl der Residuen als Überwachungsvariable ermöglicht eine schnelle Erkennung der Änderungen im Regressionsmodell der eigentlichen Überwachungsvariable, anhand einer Langzeittrenddarstellung der Residuen.

**Ausführungsbeispiel der Erfindung**

Erläutert werden die vorteilhaften Auswirkungen der Erfindung anhand eines Beispiels aus der Schwingungsüberwachung einer Maschine, insbesondere einer Maschine mit rotierenden Bauteilen.Meßtechnische Voraussetzung dafür ist das Vorhandensein ausreichend vieler Schwingungsaufnehmer.Deren Zeitsignale werden entsprechend der Gleichung (1), mittels FFT im Spektralbereich transformiert.

Ziel des Verfahrens ist es, das Betriebsverhalten bestimmter, für die Überwachung als wichtig erachteten Spektralkomponenten, so genau wie nur möglich zu modellieren. Dafür werden zusätzliche Meßgrößen - Betriebsparameter- benötigt, die, zeitgleich mit den Signalspektren, den Lastzustand und die relativen Positionen der Bauteile der überwachten Maschine beschreiben.Eine erneute Anwendung der Gleichung (1) auf die vorher ermittelten Spektralkoeffizienten (Überwachungsvariablen y), wobei diesmal die Betriebsparameter die Regressoren darstellen, ergibt das gesuchte, experimentell ermittelte Modell. Dabei werden die Modellkoeffizienten mittels KESSR ermittelt.

Anhand der Zeichnungen wird die Erfindung beispielsweise näher erläutert.Zunächst wird das Verfahren der konsistenten, erweiterten, schnellen und schrittweisen multiplen Regression erläutert. Es zeigt

Fig. 1    die Diagramme einer abhängigen Variable Y, einmal als Funktion des Regressors $X_1$ und einmal als Funktion des Regressors $X_2$ .Die Kollinearität der beiden Regressoren ist durch die lineare Beziehung untereinander belegt.

Fig. 2    die Regression der Variable Y über $X_1$ und $X_2$ , dargestellt im Stichprobenraum als Projektion auf die Regressionsebene.

Fig. 3    Effekt einer kleinen Richtungsänderung des Vektors $X_2$ auf die Regressionskoeffizienten der Variable Y

Fig. 4    Zwei Stichproben mit gleichem Korrelationkoeffizient zwischen $X_1$ und $X_2$.

Fig. 5    Modell und Vorhersage für die in Fig. 4 angegebenen Stichproben

Fig. 6    Kollinearitätskegel und Auswahl äquivalenter Regressionsmodelle

Fig. 7    Speicher 113 und seine Belegung für die Zeile des neu einzuführenden Regressors in der Rekursionsebene p

Fig. 8    Schema einer Schaltungsanordnung zur Berechnung der schnellen, erweiterten schrittweisen Regression in rekursiver Form.

Fig.9    Schema einer Einrichtung zur Schwingungs- oder Prozeßüberwachung

**Konsistente, Erweiterte, Schnelle und Schrittweise multiple Regression(KESSR)**

• <u>Theoretische Grundlagen</u>

Um die nun folgende Begriffe zu erklären, wird die geometrische Darstellung der Variablen im Stichprobenraum (z. B. /5/ pp. 201ff. ) gewählt. Dabei stellt die Stichprobe (vom Umfang L) einer abhängigen oder unabhängigen Variable einen L-dimen-sionalen Vektor in diesem Raum dar. Der Korrelationskoeffizient zwischen zwei Variablen ist demnach der Cosinus des Winkels der beiden Vektoren im Stichprobenraum. Mit $\vec{x_i}$ wird der Stichproben-Vektor der Komponente $i$ des Vektors $\vec{x}$ in (1) bezeichnet. Parallel dazu wird anhand der Figuren die erfindungsgemäße Realisierung der Methode angegeben.

• *Multikollinearität*

a) <u>Prozeßidentifikation mit kollinearen Regressoren</u>

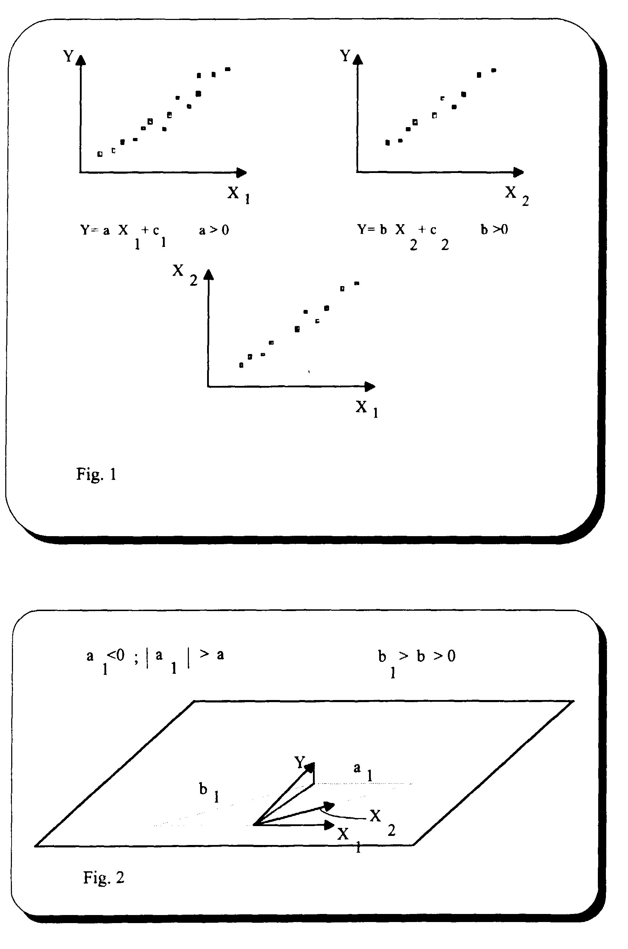

In Fig. 1 ist der Fall einer abhängigen Variablen Y mit zwei kollinearen Regressoren $X_1$ und $X_2$ dargestellt. Die Modelle mit nur einem Regressor, ergeben jeweils positive Koeffizienten. Wie aus der Darstellung im Stichprobenraum in Fig. 2 ersichtlich, ändert sich das Vorzeichen der Variablen $X_1$, was in Gegensatz zu den physikalischen Realitäten in Fig.1 steht. Da es sich hierbei um zwei äquivalente Variablen handelt, sind die beiden Modelle mit nur einem Regressor gleichberechtigt. Der Versuch beide Regressoren in das Modell aufzunehmen, führt zu falschen Vorzeichen und Werten der Koeffizienten.

### b) Prozeßidentifikation mit fehlerbehafteten kollinearen Regressoren

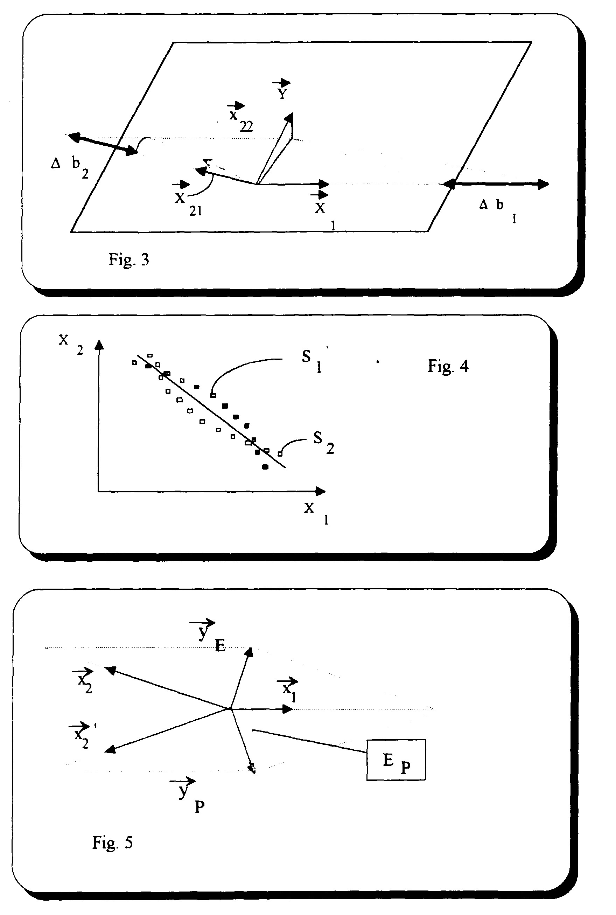

Üblicherweise wird in der multiplen Regression von der Annahme ausgegangen, daß nur die abhängige Variable fehlerbehaftet ist ($\varepsilon$ in Gleichung 1).Die erweiterte Annahme, daß auch die unabhängigen Variablen fehlerbehaftet sind /10/,/11/, läßt sich im Stichprobenraum durch die Variation des Winkels zwischen zwei Parametervektoren anschaulich verdeutlichen. In Fig. 3 sind zwei Stichproben dargestellt, wobei angenommen wird, daß $\vec{X}_1$ die gleiche Ausrichtung hat, während $\vec{X}_2$ zwei unterschiedliche Ausrichtungen relativ zu $\vec{X}_1$ einnimmt: $\vec{X}_{21}$ und $\vec{X}_{22}$. Für die Modellidentifikation bedeutet dies, daß die Koeffizienten, große Variationen $\Delta b_1$ und $\Delta b_2$ erfahren, wenn die Richtungen zweier kollinearer Regressoren aufgrund von Meßfehler von einer Stichprobe zur anderen, geringfügigen Schwankungen unterliegen.

### c) Modell mit fehlerbehafteten, kollinearen Regressoren: Prädiktionsfehler

Fig. 4 zeigt $\vec{X}_2$ als Funktion von $\vec{X}_1$ für zwei Stichproben gleicher Korrelation zwischen den beiden Variablen (gleicher Cosinus im Stichprobenraum). Das Modell wurde über die Stichprobe $S_1$ gelernt, der, in Fig. 5, die Konfiguration $\vec{X}_1$ mit $\vec{X}_2$ und $\vec{y_E}$ entspricht. Der Stichprobe $S_2$ in Fig. 4 entspricht in Fig. 5 die Konfiguration $\vec{X}_1$ mit $\vec{X}_2$ und der Vorhersage $\vec{y_P}$. Der dabei gemachte Fehler wurde mit $\vec{E_P}$ bezeichnet.

➤ Je größer die stochastischen Fehler eines Regressors sind, umso schwieriger wird es, die oben genannten Effekte b) und c) zu vermeiden.Daher müssen bei der Definition der Multikollinearität die Fehler der Regressoren berücksichtigt werden. Danach sind zwei fehlerbehaftete Regressoren kollinear, wenn deren Vektoren im Stichprobenraum (für Stichproben gleicher Länge) aufgrund der stochastischen Fehler keine stabile Hyperebene definieren.

➤ Für Regressorpaare gleicher Varianz der Richtung im Stichprobenraum ist somit die Kollinearität kleiner, wenn der mittlere Winkel zwischen den Regressoren größer ist. Bei gleichem mittleren Winkel nimmt die Kollinearität mit wachsender Richtungsvarianz der beteiligten Regressoren zu. Die in der Literatur bekannte Definition, wonach zwischen den kollinearen Regressoren eine lineare Beziehung bestehen muß/4/, gilt nur für (fast) fehlerfreie Regressoren.

### • Kollinearitätskegel

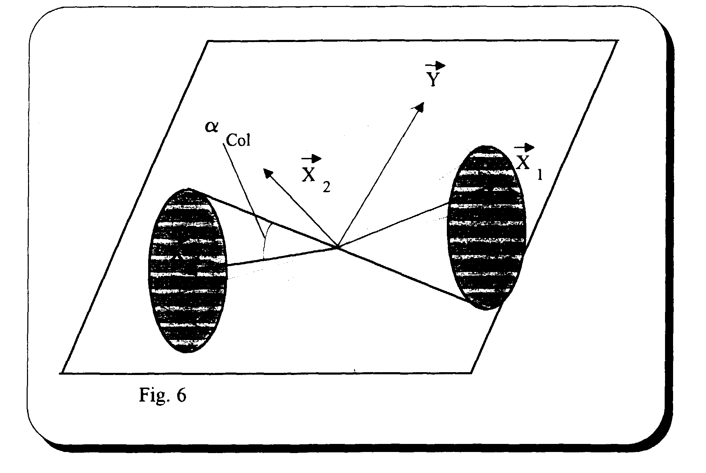

Falls die mittlere Richtung einer Regressorvariablen im Stichprobenraum sowie deren Varianz bekannt ist, läßt sich in diesem Raum um den betrachteten Vektor ein Kegel definieren, mit der Öffnung $\alpha_{Col}$ (Fig. 6 für $\vec{X}_3$). Sobald dieser Regressor im Modell berücksichtigt wird, darf kein weiterer Regressor dessen Richtung innerhalb des Kollinearitätskegels liegt, im Regressionsmodell aufgenommen werden: in Fig. 6 z. B., darf der Regressor $\vec{X}_1$ nicht mehr aufgenommen werden, da es mit $\vec{X}_3$ ein instabiles Modell bilden würde. Es sei ausdrücklich darauf hingewiesen, daß der Toleranztest in /4/ einem Winkel $\alpha_{Col}$ von max. 1,82 (Grad) entspricht /4/, /6/, /7/. Für die meisten Anwendungen ist dieser Wert völlig unbrauchbar.

### • Auswahl äquivalenter Modelle

Da in Fig. 6 die Regressoren $\vec{X}_1$ und $\vec{X}_2$ in derselben Ebene im Stichprobenraum liegen wie die abhängige Variable $\vec{Y}$, bilden sie die ideale Lösung für das gestellte Problem. Die schrittweise Regression hingegen startet mit dem Regressor, der die beste Korrelation mit der abhängigen Variable hat, und das wäre im vorliegenden Fall $\vec{X}_3$. Aufgrund des Kollinearitätskegels wird der Regressor $\vec{X}_1$ nie im Modell aufgenommen und das "beste" Modell wird somit nicht gefunden. Sobald aber alle Regressoren die im Kollinearitätskegel liegen, als äquivalente Startvariablen angesehen werden und der Reihe nach getestet werden, wird auch das "beste" Modell gefunden. Damit werden die Hauptnachteile der schrittweisen Regression (nur ein Modell und nicht unbedingt das "beste") beseitigt. Durch das beschriebene Auswahlverfahren bietet sich eine rekursive Form der Modellberechnungen.

### • Schnelle Matrixberechnung

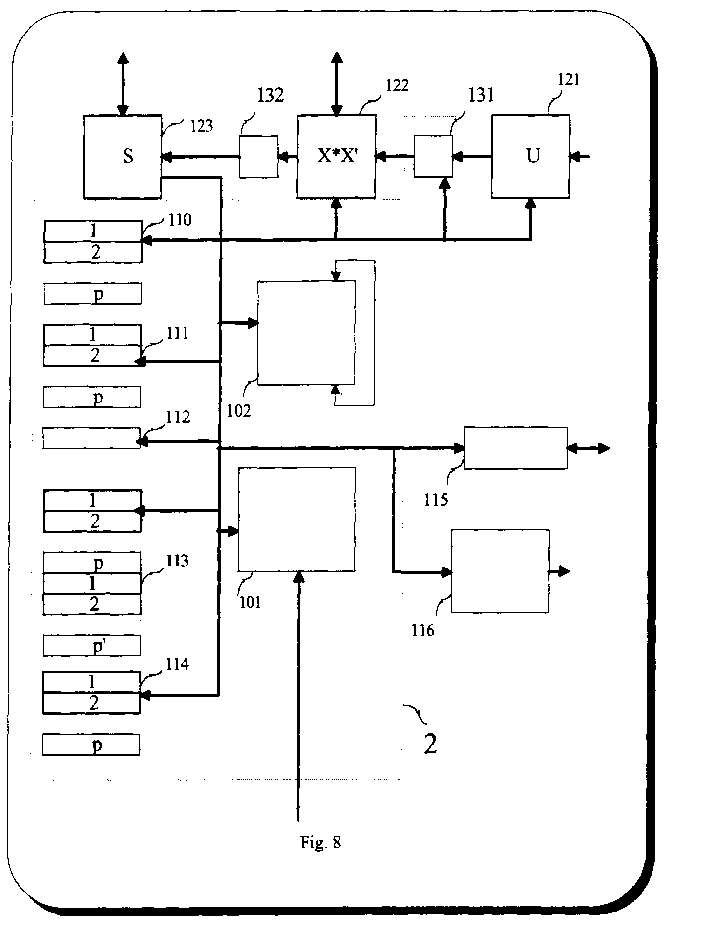

Der Methode in /4/ folgend, werden alle Variablen auf ihren Mittelwert zentriert. Damit enthält die dort angegebene Matrix S (Korrelationsmatrix,Speicher 123 in Fig. 8) in den nichtdiagonalen Elementen nur paarweise Korrelationskoeffizienten. Die Diagonalelemente stellen die Längen der Einheitsvektoren im Stichprobenraum dar. Bei einer abhängigen Variable und N Regressoren hat die Matrix S die Dimension $(N+1)*(N+1)$.

Die schrittweise Regression ist eigentlich nichts anderes als das Gauß'sche Verfahren zur Inversion einer Matrix, wobei nach dem unten angegebenen Verfahren eine bestimmte Reihenfolge der Pivot-Elemente vorgegeben wird. Dabei werden/4/ lediglich die Elemente der Spalte der abhängigen Variablen (für den F-Test und für die Berechnung der Regressionskoeffizienten), von nun an abhängige Spalte genannt, und die Diagonalelemente (für den Kollinearitäts- test) benötigt. Für eine Rekursionsebene p ergibt sich damit ein Speicherbedarf von $2N+1$ Werte im Speicher 111, Fig. 8.

In der Rekursionsebene p wird der Regressor $x_{j_p}$ gewählt. Die Matrixelemente des Speichers 111 in Fig. 8 in der Rekursionsebene p, haben nach der Aufnahme dieses Regressors die Form(k=1,2,...N):

$$S_{kk}^{j_p j_{p-1} \cdots j_2 j_1} = S_{kk}^{j_{p-1} \cdots j_2 j_1} - S_{k j_p}^{j_{p-1} \cdots j_2 j_1} \times S_{k j_p}^{j_{p-1} \cdots j_2 j_1} \quad (3)$$

$$S_{ky}^{j_p j_{p-1} \cdots j_2 j_1} = S_{ky}^{j_{p-1} \cdots j_2 j_1} - S_{k j_p}^{j_{p-1} \cdots j_2 j_1} \times S_{y j_p}^{j_{p-1} \cdots j_2 j_1} \quad (4)$$

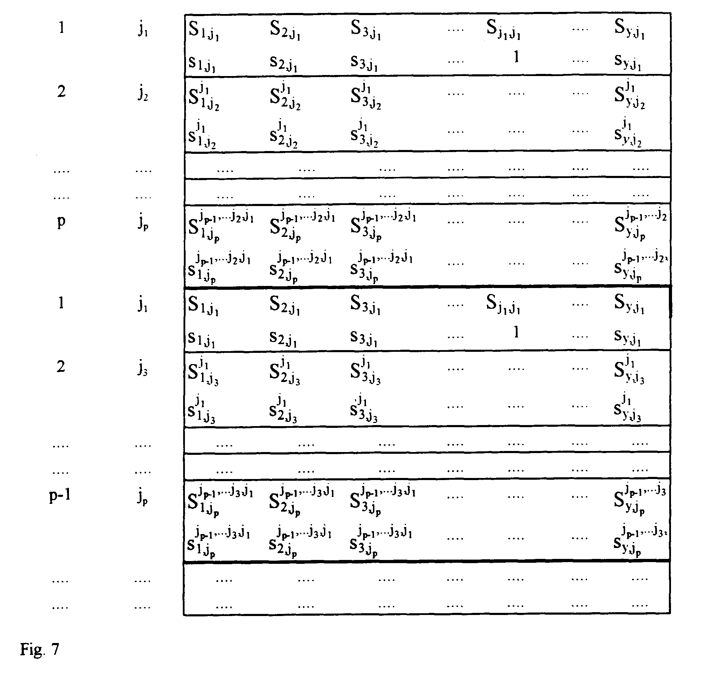

Die oberen Indizes geben die Nummem der Regressoren an, die bereits im Modell aufgenommen wurden. Mit $S_{k j_p}^{j_{p-1} \cdots j_2 j_1}$ werden die auf $S_{j_p j_p}^{j_{p-1} \cdots j_2 j_1}$ normierten Matrixelemente mit gleichen Indizes bezeichnet.Die Matrixelemente rechts des Gleichheitszeichens wurden in der Rekursionsebene p-1, Speicher 111, Fig. 8, berechnet. Die Matrixelemente $S_{k j_p}^{j_{p-1} \cdots j_2 j_1}$ der aktuellen Rekursionsebene p werden aus den darüberliegenden Zeilen der Matrix A in Fig. 7 (Speicher 113 in Fig.8) berechnet, wobei das Element $S_{j_p j_p}^{j_{p-1} \cdots j_2 j_1}$ in den Speichem 111 und 113 für die sog. Rekursionsmatrix, mit seinem Kehrwert ersetzt wird :

$$S_{k j_p}^{j_{p-1} \cdots j_2 j_1} = S_{k j_p} - \Sigma A(2 \times i\text{-}l,k) \times A(2 \times i, j_p) \quad (5)$$

Der Zeilenindex i in (5) nimmt die Werte von 1 bis p-1 ein.$S_{k j_p}$ ist ein Element der Korrelationsmatrix S im Speicher 123 in Fig. 8. Sobald ein Regressor aus dem Modell herausgenommen wird, weil sein Beitrag vernachlässigbar geworden ist, muß die Rekursionsmatrix A in Fig. 7 (Speicher 113 in Fig. 8) neu gerechnet werden. Wie aus Fig.7 ersichtlich, wurde hier die Variable $j_2$ aus dem Modell herausgenommen, so daß für die Rekursionsebene p in (5) die Variable i die Werte von 1 bis p-2 annimmt, mit einem Offset von 2*p, der nun im Offset-Speicher 112 für die Rekursionsebene p abgelegt wird.

Bei einer Regressorenzahl N=100 und 7 berücksichtigte Rekursionsebenen reduziert sich durch die oben angegebene Vorgehensweise der Rechenaufwand (Multiplikationen) um ca. 90%, verglichen mit der üblichen Methode, bei der die Symmetrie der Korrelationsmatrix S berücksichtigt wird..

*• Konsistente Schätzung*

Im Laufe der Modellidentifikation stellen die Diagonalelemente der Variablen die noch nicht im Modell aufgenommen wurden, das Quadrat der Länge des Residuenvektors der jeweiligen Variablen dar ( Abstand der ursprünglichen Einheitsvektorspitze zum aktuellen Regressionsraum). Dieses Diagonalelement darf den Wert $\sin^2 (\alpha_{Col})$ nicht unterschreiten, wenn der zugehörige Regressor in das Modell aufgenommen werden soll. Damit stellt sich das Problem der Schätzung des Kollinearitätswinkels $\alpha_{Col}$ und in Zusammenhang dazu auch das Problem der konsistenten Schätzung.

Wenn die realistische Annahme eines fehlerbehafteten Regressors $x_{j_p}$ gemacht wird:

$$x_{j_p} = \xi_{j_p} + \delta_{j_p}$$

mit $\xi_{j_p}$ als wahrer Wert des Regressors $j_p$ und $\delta_{j_p}$ als der zugehörige Fehler, sowie unter den in der Literatur üblichen Annahmen der Fehlerunabhängigkeit, erhält man für das Diagonalelement $S_{j_p j_p}$ in 123 Fig. 8, einen Korrekturterm, der mit der normierten Varianz des Regressors $j_p$ gleich ist. Damit erhält man eine Ridge-Regression mit zeilenspezifischen Korrekturtermen der Diagonalelemente. Unter der Zusatzannahme der Isotropie der Fehler im Stichprobenraum, läßt sich damit auch der Kollinearitätswinkel für den betrachteten Regressor angeben:

$$\sin^2(\alpha_{Col}) = q \times \sigma_{j_p}^2 \quad (6)$$

wobei q >=3 sein sollte und $\sigma_{j_p}^2$ die normierte Varianz des Regressors $j_p$ darstellt. Die Varianz der einzelnen Regressoren läßt sich aus dem vorhandenen Datenmaterial schätzen, indem man die hier vorgestellte multiple Regression auf die einzelnen Regressoren als abhängige Variable anwendet, unter der vereinfachenden Annahme der Fehlerfreiheit der restlichen Regressoren, aber unter Verwendung eines ausreichend großen Kollinearitätskegels nach Gleichung (6). Wenn zwischen den Regressoren Kollinearität besteht,läßt sich ein Regressionsmodell ermitteln und die sich ergebenden Residuen geben eine Schätzung der Varianz $\sigma_{j_p}^2$.

*• Erweiterte schrittweise Regression*

In Anlehnung an /4/ kann nun die Vorgehensweise bei der erweiterten schrittweisen Regression angegeben werden, die in der Regressionseinheit 102, Fig. 8 implementiert wird. Die Steuerung des Datentransfers sowie die Ablaufsteuerung wird durch die Steuereinheit 101 kontrolliert.In Kursivschrift werden die Erweiterungen zu /4/ angegeben. Es handelt sich um ein rekursives Verfahren und die hier angegebene Schritte beziehen sich auf die Rekursionsebene p.

1) zunächst werden die Regressoren aus dem Modell entfernt, deren Beitrag zur Varianz-Reduktion der abhängigen Variable, im Beisein der neu hinzugekommenen Regressoren, vernachlässigbar geworden sind.Diese Regressoren werden für die nachfolgenden Rekursionsebenen gesperrt. Dadurch wird einerseits Rechenzeit eingespart, und andererseits eine Wiederaufnahme im Regressionsmodell verhindert.Der Offset-Speicher 112 wird für die Rekursionsebene p aktualisiert. Die Zeile p im Speicher 110 -Spernmaskenmatrix - wird auf den neuesten Stand gebracht und die Zeilen u+1 bis u+2p' (u=Offset,p'=neue Modellordnung) im Speicher 113 für die Rekursionsmatrix werden gemäß (5) neu gerechnet und abgelegt. Die Zeile p-1 im Speicher 111 für die Diagonalelemente und die abhängige Spalte, muß ebenfalls neu gerechnet werden ohne aber auf die Zeile p-2 des gleichen Speichers zurückzugreifen.

2) die Modellordnung und die Regressornummern werden im Speicher 114 abgelegt.

3) die Regressoren, deren Richtung im Stichprobenraum einen Winkel mit dem Regressionsraum bilden, der kleiner ist als $\alpha_{Col}$ , werden für die aktuelle und die darunterliegenden Rekursionsebenen gesperrt (Zeile p im Speicher 110).Dies spart Rechenzeit

4) die übriggebliebenen Regressoren werden einem F-Test unterzogen, um die Regressoren zu finden, die die Varianz der abhängigen Variablen in signifikanter Weise reduzieren.

5) falls ein signifikanter Regressor gefunden wurde weiter bei 6, ansonsten wird die Suche abgebrochen, und die bisher erreichte Residuenvarianz/4/ der abhängigen Variable. zur Klassifikation des gefundenen Modells zwischen den ersten Q "besten" Modellen genutzt. Die im Speicher 116 abgelegten Residuenvarianzen der bisher gefundenen Modelle werden mit der Residuenvarianz des aktuellen Modells verglichen und wenn es zu den besten Q Modellen gehört, d. h. wenn die aktuelle Residuenvarianz unter den Q kleinsten ist, wird im Speicher 116 die Residuenvarianz sowie die Modellkoeffizienten mit Regressorennummern abgelegt. Danach kehrt das System in die <u>nächsthöhere</u> Rekursionsebene zurück.Dabei wird der Kontext der Rekursionsebene p-1 aus den Speichern 110 bis 114 geladen.

6) aus den übriggebliebenen Regressorvariablen wird die Variable $\overrightarrow{X}_{j_{JM}}$ ausgewählt, deren Aufnahme in das Regressionsmodell die größte Varianzminderung bringen würde.

7) alle übriggebliebenen Regressorvariablen deren Winkel mit $\overrightarrow{X}_{j_{JM}}$ innerhalb des Kollinearitätskegels dieser Variable liegen, werden als äquivalente Variablen ausgewählt.Dafür wird aus Speicher 115 die vorher berechnete oder vorgegebene Residuenvarianz des ausgewählten Regressors gelesen und daraus wird der Kollinearitätswinkel berechnet.Die äquivalenten Variablen werden der Reihe nach in das Modell aufgenommen, während die anderen äquivalenten Variablen für die nächste Rekursionsebene gesperrt werden(Zeile p im Speicher 110). Dabei wird:

a) die Diagonalelemente und die abhängige Spalte der Regressionmatrix mit dem neu gewählten Regressor gerechnet, wobei zuerst geprüft wird:

- ob der neu aufzunehmende Regressor, ein Vorzeichenwechsel eines Regressionskoeffizienten (Effekt a))verursacht. Wenn ja, dann wird diese Wahl verworfen und in 110 gesperrt und der nächste äquivalente Regressor wird angewählt und in 110 frei geschaltet ; weiter bei a).

- ansonsten

- wird die nächsttiefere Rekursionsebene angewählt.Bei Rückkehr aus dieser Ebene weiter bei a) unter den entsprechenden Änderungen in 110.

8) Wenn alle äquivalente Regressoren der vorliegenden Rekursionsebene getestet wurden, kehrt das System in die <u>nächsthöhere</u> Rekursionsebene zurück.Dabei wird der Kontext der Rekursionsebene p-1 aus den Speichern 110 bis 114 geladen.

**Modellvorgabe**

Dem Regressionsmodul oder -prozessor liegt eine Daten-Eingangsmatrix U vor (121, Fig. 8) mit L Zeilen für die L Eingangskanäle einschließlich des zu überwachenden Signals. Jede Zeile hat hat V Werte(Stichprobenlänge). Zwecks einer besseren Modellierung werden dem Funktionengenerator (131,Fig. 8) verschiedene nichtlineare Funktionen vorgegeben (höhere Potenzen, Logarithmen, Kreuzprodukte zwischen den Regressoren, Gradienten ,einfache Verschiebungen der Zeilen, usw.). Dadurch werden zusätzliche Zeilen generiert, so daß eine Zwischenmatrix X mit N Zeilen und V Spalten entsteht.Dabei können die Zusatzfunktionen entweder durch theoretische Überlegungen bezüglich des zu untersuchenden Signals(Prozesses), oder empirisch, zwecks der Identifikation eines empirischen Modells vorgegeben werden. Aus dieser Matrix X wird die Kovarianzmatrix XX' berechnet aus der wiederum die Korrelationsmatrix im Speicher 123 ermittelt wird.

**Schwingungsüberwachungssystem**

Nachdem die Grundlagen für ein langzeitstabiles Prozeßmodell geschaffen wurden, kann man jetzt die vorhin beschriebene erfindungsgemäße Schaltungsanordnung oder Verfahren z. B. in der Schwingungsüberwachung anwenden.Mit dem erhaltenen Regressionsmodell einer Spektralkomponente kann man nun, zwecks einer Schadensfrüherkennung sowohl die Abweichungen der Spektralkomponente vom Modell, als auch die Veränderungen der Koeffizienten der ermittelten Modelle überwachen. Dabei kommt der Überwachung die Redundanz der Q Regressionsmodelle zugute.

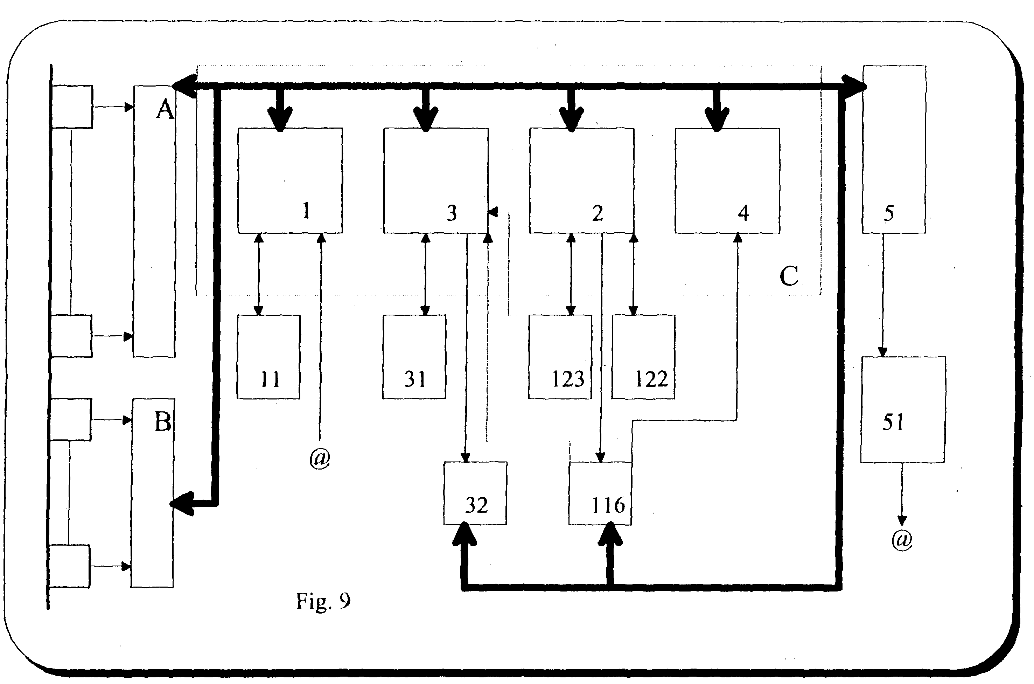

Um die Wirkungsweise des erfindungsgemäßen Verfahrens zu erläutern, wird die Vorrichtung in Fig.9 anhand einer Anwendung zur Schadensfrüherkennung durch Schwingungsüberwachung erläutert.

Ein handelsübliches Meßdatenerfassungssystem (Fig. 9, A) stellt der Überwachungseinheit (Fig. 9, C) die Überwachungsgrößen zur Verfügung. Ein weiteres handelsübliches Prozeßdatenerfassungssystem (Fig. 9, B) stellt der Überwachungseinheit (Fig. 9, C) zeitgleich mit den Überwachungsgrößen eine bestimmte Auswahl an Prozeßparametern zur Verfügung. Im Falle eines Schwingungsüberwachungssystems werden als Prozeßparameter solche Signale aufgezeichnet, die den Lastzustand der Anlage und die wichtigen Relativpositionen der Anlagenbauteile (z. B. im Falle einer Turbine die Relativpositionen Welle- Lagerschale) beschreiben. Als Überwachungsgrößen werden z. B. die Schwingamplituden bei bestimmten Frequenzen aufgezeichnet.

In der Überwachungseinheit wird zunächst der Betriebszustand der Anlage im Zustandsanalysemodul untersucht (Fig.9,1). Hierbei wird mit Hilfe der Daten im Speicher 11, Fig. 9 entschieden, ob ein noch nicht hinreichend (im statistischen Sinne) gelernter Betriebszustand vorliegt. Ist das der Fall, so wird zunächst der Betriebszustandskontrollspeicher (Fig. 9, 11) auf den neuesten Stand gebracht, wonach die Prozeßidentifikation durch die oben beschriebene Regressionseinheit (Fig. 9, 2 bzw. Fig. 8,2) durchgeführt wird. Dabei werden die Speicher für die Kovarianzmatrix, die Korrelationsmatrix und der für die Regressionskoeffizienten und Funktionsnummern, für die Q besten Modelle, auf den neuesten Stand gebracht (Fig. 9, 122,123 bzw. 116). Dieser Vorgang wird als "Lemphase" definiert und dient der vollständigen Prozeßidentifikation und somit der Reduktion systematischer Fehler. Er wird nur unter der Voraussetzung angeregt, daß bei bereits gelernten Betriebszuständen keine Grenzwertüberschreitungen im Speicher 51 anstehen oder sonstige Alarmkriterien erfüllt sind (Fig. 9, Pfad @).

Nachdem die Lemphase abgeschlossen ist, oder wenn kein neuer Betriebszustand vorliegt, wird die Kontrollprozeßidentifikation (Fig. 9, 3) durchgeführt. Dabei werden die Kontrollwerte der Koeffizienten und die sich durch die Kontrolle ergebenden Funktionsnummern unter Berücksichtigung der in 116 gespeicherten Werte ermittelt und im Speicher 32 abgelegt. Die Werte des Speichers 32 (als Ringspeicher ausgelegt) können dann jederzeit über die Zeit dargestellt werden und mit den Werten im Speicher 116 zwecks einer verfeinerten Schadensfrüherkennung verglichen werden.

Sobald die Lem- und/oder Kontrollrechnung abgeschlossen ist, generiert die Komparatoreinheit (Fig. 9,4) aus den Daten des Speichers 116 die Schätzwerte der zu überwachenden Signale, wobei die Redundanz der Q Modelle genutzt werden kann. Bei einem Schaden, der sich im überwachten Frequenzband bemerkbar macht, wird der geschätzte Wert im Laufe der Zeit immer stärker vom aktuellen Wert abweichen. Daher bietet sich als Überwachungsfunktion die Differenz zwischen dem aktuellen Wert der Überwachungsvariable und dem Schätz- wert, Residuum genannt, an. Das im Komparator gebildete Residuum wird einer nachgeschalteten Alarmeinrichtung oder einem Rechner (Fig. 9, 5) zugeführt, wo nach vorgegebenen Alarmkriterien die Grenzwertüberschreitungen im Speicher 51 registriert werden.

Die Darstellung der Überwachungsergebnisse und Diagnosehilfen werden vom Rechner bereitgestellt.

Kem der Überwachungseinheit (Fig. 9, C) ist die Regressionseinheit (Fig. 8 und 9,2) in der die für die Schadensfrüherkennung wichtige Prozeßidentifikation stattfindet. Die Kontrollprozeßidentifikation (Fig. 9,3) ist baugleich mit Fig. 9,2. Im Gegensatz zu Einheit 2 in Fig. 9 werden in der Einheit 3 in Fig. 9 die Daten des Speichers 116 genutzt,d. h. es werden nur die Regressorfunktionen zur Verfügung gestellt, die in den Q Modellen gefunden wurden, um vergleichbare Kontrollwerte zu erhalten.

/1/    Offenlegungsschrift Deutschland 3725123 A1

/2/    Rechnergestützte schwingungsdiagnostische Überwachung von Kraftwerksturbosätzen, M. Weigel, J. Boetius, VDI-Berichte Nr. 846, 1990

/3/    M. Seitz, A. Kunz, H. Tolle, Lemende Regelung von Totzeitprozessen ,Auto matisierungstechnik 41, Vol. 9, pp. 323-331, 1993

/4/    M. A. Efroymson, Mehrfache Regressionsanalyse, Kapitel 17 in A.Ralston, H.S. Wilf, Ed., Mathematische Methoden für Digitalrechner, R. Oldenbourg Verlag 1967, pp. 345-362

/5/    Applied regression analysis, N.R. Draper, H. Smith, John Wiley & Sons 1981

/6/    Tolerance and Condition in Regression Computations, Kenneth N, Berk, Joumal of the American Statistical Association, Dec. 1977, Vol. 72, No. 360, pp. 863-866

/7/    A Note on Checking Tolerance in Matrix Inversion and Regression, James W. Frane, Technometrics. Vol. 19. No. 4 Nov. 1977, pp. 513-514

/8/    G. M. Mullet, Why Regression Coefficients Have the Wrong Sign, Joumal of Quality Technology, Vol. 8, No.3, pp. 121-126, July 1976

/9/    G. E. P. Box. Use and Abuse of Regression, Technometrics, Vol. 8, No. 4 pp. 625 -629, Nov 1966

/10/   H. Schneeweiß, H.-J. Mittag, Lineare Modelle mit fehlerbehafteten Daten, Physica-Verlag Heidelberg Wien, 1986

/11/ H. Bunke, O. Bunke, Ed., Nonlinear Regression, Functional Relations and Robust Methods, Vol II, Kap. 3, John Wiley & Sons

/12/ R.R.Hocking, The Analysis and Selection of Variables in Linear Regression, Biometrics 32, pp. 1-49, March 1976

/13/ S. Drobniak, W. Elsner, The Multiregression Identification Algorithm for the Condition Monitoring of Turbomachinery, 8th International IMEKO Symposium on Technical Diagnostics, Sept. 23-25, 1992, Dresden, pp. 319-328

/14/ Applied regression analysis, N.R. Draper, H. Smith, John Wiley & Sons 1981, pp. 344-349

/15/ NTIS FOREIGN TECHNOLOGY SERIES, US DEPARTMENT OF COMMERCE Bd. PB82, Nr. 9707, 1982: 'REGPAC: A STATISTICAL REGRESSION PACKAGE'

## Patentansprüche

1. Einrichtung zur Durchführung der konsistenten, erweiterten, schnellen und kollinearitätsfreien multiplen Regression in rekursiver Form zur Analyse oder Steuerung eines technischen Prozesses, dadurch gekennzeichnet,

   - daß der Prozessor (2) aus den Daten des Speichers für die Korrelationsmatrix (123), die über die Einheit zur Korrelationsberechnung (132) aus dem Speicher (122) für die Kovarianzmatrix gewonnen werden kann, und dem Speicher für die vorgegebenen oder vorgerechneten Regressorvarianzen (115), die zur Korrektur der Diagonalelemente der Korrelationsmatrix verwendet werden, die Q besten Regressionsmodelle berechnet, und

   - daß die von der Steuer- und Adressiereinheit (101) busgesteuerte Regressionseinheit (102) des Prozessors (2), diese Regressionsmodelle anhand ihrer Residuenvarianz klassifiziert, wobei deren Residuenvarianz, Regressornummem und -koeffizienten im dafür vorgesehenen Speicher (116) abgelegt werden, und

   - daß für die Realisierung der rekursiven Methode ein Sperr-Speicher (110), ein Speicher für die Diagonalelemente und die abhängige Spalte der Regressionsmatrix (111), ein Speicher für die Rekursionsmatrix (113) mit einem dazugehörigen Offset-Speicher (112), und ein Speicher für die Regressornummem (114) vorgesehen sind, und

   - daß für eine Rekursionsebene p, die Regressionseinheit (102) mehrere Aktionen vornehmen muß, und zwar,

   - daß anhand der Diagonalelemente und der abhängigen Spalte (111) und den Regressornummem (114), zunächst die Regressoren ermittelt, die einen geringen Beitrag zum Modell haben, und gegebenenfalls die ausscheidenden Regressoren sperrt (110), den Offset für die Rekursionsmatrix ablegt (112), die Regressorzeilen der neuen Rekursionsmatrix(113) und die neuen Diagonalelemente und abhängige Spalte (111) berechnet, und die verbliebenen Regressornummem (114) ablegt,

   - daß mit Hilfe der Daten aus dem Speicher für Regressorvarianzen (115), die Regressoren ermittelt und gesperrt (110) werden, die sich innerhalb des Kollinearitätskegels des aktuellen Modells befinden,

   - daß der signifikanteste Regressor aus den verbliebenen gesucht wird, d. h. derjenige Regressor ausgewählt wird, der das Modell mit der kleinsten Residuenvarianz ergibt und gleichzeitig den aus der Statistik bekannten F-Test besteht, und

   - daß bei erfolgloser Suche, die Residuenvarianz des aktuellen Modells, zur Klassifikation dieses Modells zwischen den besten Q genutzt wird, und zwar mit Hilfe der Residuenvarianzen der bereits gefundenen Modelle (116), wobei wenn die Residuenvarianz kleiner oder gleich mit der größten abgespeicherten Residuenvarianz, oder zur Zeit weniger als Q Modelle gefunden wurden, die Residuenvarianz, die Regressornummem und -koeffizienten im Speicher für die besten Modelle (116) abgelegt werden, und danach, die Regressionseinheit (102) in die Rekursionsebene p-1 zurückkehrt, und ihr Kontext aus den entsprechenden Speichem (110 bis 114) geladen wird,

   - daß bei einer erfolgreicher Suche nach einem signifikanten Regressor, mit den Werten der Regressorvarianzen (115), der Satz der Regressoren ermittelt wird, die sich innerhalb des Kollinearitätskegels des besten Regressors befinden,

   - daß nacheinander jeder dieser Regressoren einzeln im Modell aufgenommen wird, während die restlichen, zum kollinearen Satz gehörenden, gesperrt bleiben (110), und unter der Voraussetzung, daß keines der bereits ermittelten Regressionskoeffizienten einen Vorzeichenwechsel erfährt, die Zeilen der Rekursionsmatrix (113) für den neuen Regressor und die neuen Diagonalelemente und abhängige Spalte (111) berechnet werden und die Rekursionsebene p+1 angewählt wird,

   - daß nach der Bearbeitung der kollinearen Regressoren in die Rekursionsebene p-1 gewechselt wird, wobei ihr Kontext aus den entsprechenden Speichem (110 bis 114) geladen wird.

**2.** Schaltungsanordnung nach Anspruch 1, dadurch gekennzeichnet ,

- daß mehrere Regressionseinheiten (102) mit zugehörigem Speicher parallel betrieben werden.

**3.** Schaltungsanordnung nach Anspruch 1, dadurch gekennzeichnet ,

- daß mehrere Regressionseinheiten (102) mit zugehörigem Speicher in mehreren Ebenen parallel betrieben werden, wobei die Zahl der Regressionseinheiten (102) in den hierarchisch tiefer liegenden Ebenen zunehmen kann.

**4.** Einrichtung nach Anspruch 1 zur Überwachung eines technischen Prozesses oder von Schwingungen einer Maschine oder Bauteilen davon, insbesondere Maschinen mit rotierenden Bauteilen, unter Verwendung von Sensoren zur Messung von Überwachungsvariablen, und von Parametern, die den Prozeß/Lastzustand/relativen Positionen der Bauteile der überwachten Maschine beschreiben, und durch Modellierung des Parameterverhaltens der Überwachungsvariablen mittels der konsistenten, erweiterten, schnellen und kollinearitätsfreien multiplen Regression in rekursiver Form, dadurch gekennzeichnet,

- daß zur Erfassung der Überwachungsvariablen eine Meßwerterfassungseinheit (A) und zur Erfassung der Parameter ein Prozeßerfassungssystem (B) vorgesehen ist,
- daß mit der Meßwerterfassungseinheit (A) und dem Prozeßerfassungssystem (B) eine busgesteuerte Überwachungseinheit (C) mit Rechner (5) verbunden ist,
- daß die Überwachungseinheit (C) eine Steuer- und Zustandsanalyseeinheit (1) aufweist, die, anhand der Daten im Betriebszustandskontrollspeicher (11), folgende Aufgaben hat:

    a) Prüfung des Betriebszustandes; bei Normalzustand weiter bei b) ansonsten Alarmmeldung auslösen und im Alarmspeicher (51) ablegen,
    b) wenn neue, noch nicht gelernte Betriebszustände auftreten, eine neue Modellbildung in der Regressionseinheit (2) anregt, Lemphase genannt, soweit keine Alarme im Alarmspeicher (51) anstehen und anschließend den Betriebszustandskontrollspeicher (11) auf den neuesten Stand bringt,
    c) eine Kontrollmodellbildung in der Regressionskontrolleinheit (3) anregt, wenn ein bereits gelernter Betriebszustand vorliegt,

- daß in der Regressionseinheit (2) die Q neuen Modelle nach dem KESSR-Verfahren berechnet werden, und der Koeffizienten- und Funktionsnummernspeicher (116) auf den neuesten Stand gebracht wird, wobei der dazugehörige Funktionengenerator (131) aus den Daten der L Eingangskanäle eine Vielzahl N, mit N viel größer als L, von zusätzlichen, frei wählbaren, linearen und nichtlinearen Funktionen der Regressoren zur Verfügung stellt, und damit die Daten der dazugehörigen Kovarianzmatrix-(122) und Korrelationsmatrix-Speicher(123) auf den neuesten Stand gebracht werden,
- daß in der Regressionskontrolleinheit (3) die Kontrollmodellbildung nach dem KESSR-Verfahren durchgeführt wird, wobei die in der Regressionseinheit (2) ermittelten Parameterfunktionen aus dem Koeffizienten- und Funktionsnummernspeicher (116), und die aktuellen Meßdaten, unter Verwendung eines mit dem in der Regressionseinheit (2) identischen Funktionengenerators (131), zur Berechnung der Werte im Kontrollkovarianzmatrix-Speicher (31) benutzt werden, und die erhaltenen Modellkoeffizienten und Funktionsnummern im Ringspeicher (32) zwecks einer Erkennung von Trendentwicklungen in den Q Modellen abgelegt werden,
- daß in der Schätzwert- und Komparatoreinheit (4), zunächst die Q Schätzwerte der Überwachungsvariablen, oder der Schätzwert eines Prozessmodells, der durch die Ausnutzung der Redundanz der Q Regressionsmodelle erhalten wird, berechnet, dann die Residuen der Überwachungsvariablen und/oder der Beiträge der einzelnen Parameter gebildet, und bei Erfüllung verschiedener Alarmkriterien, wie Grenzwertüberschreitungen, sowie Modelländerungen, Alarmmeldungen gebildet, die im Alarmspeicher (51) abgelegt, und zu Schadens- und/oder Prozeß-Diagnose herangezogen werden,
- und daß der Rechner (5) die Visualisierung der Residuen und Modelländerung/en anhand der Daten im Ringspeicher (32) sowie die Bearbeitung bzw. Weitergabe der im Alarmspeicher (51) anstehenden Alarme übernimmt.

**5.** Schaltungsanordnung nach den Ansprüchen 1 bis 3, dadurch gekennzeichnet ,

- daß aus dem Speicher (121) der Eingangsmatrix U mit L Zeilen entsprechend der Zahl der Eingangskanäle und V Spalten entsprechend des Stichprobenumfanges, der Funktionengenerator (131) eine Vielzahl von zusätzlichen, frei wählbaren, linearen und nichtlinearen Funktionen der Regressoren zur Verfügung stellt, und damit eine Zwischenmatrix X mit N Zeilen, wobei N viel größer als L ist, und gleicher Spaltenzahl erzeugt, womit die Kovarianzmatrix XX' berechnet wird, und

- daß die Q ermittelten Regressionsmodelle, oder ein Prozessmodell, der durch die Ausnutzung der Redundanz der Q Regressionsmodelle erhalten wird, zur Steuerung oder Analyse eines Prozesses genutzt werden.

6. Einrichtung nach Anspruch 4, dadurch gekennzeichnet,

- daß das Residuum der Überwachungsvariable einer Stellvorrichtung zugeführt wird. die eine oder mehrere Prozeßeingangsgrößen verändern kann, zwecks Regelung des Prozesses.

7. Einrichtung nach einem der Ansprüche 1 bis 4, dadurch gekennzeichnet,

- daß die Leistungsmerkmale der Schaltungsanordnungen auf ein Rechner bzw. in Parallelrechner-Architektur realisiert werden.

8. Verfahren zur Analyse oder Steuerung eines technischen Prozesses, anhand von Regressionsmodellen, die mittels der konsistenten, erweiterten, schnellen und kollinearitätsfreien multiplen Regression, kurz KESSR, in rekursiver Form berechnet werden, für verschiedene, für den Prozeß relevanten Größen, in Abhängigkeit von anderen, den Prozeß beschreibenden oder beeinflussenden Parameter, Regressoren genannt, dadurch gekennzeichnet,

- daß aus der Eingangsmatrix U mit L Zeilen entsprechend der Zahl der Eingangskanäle und V Spalten entsprechend des Stichprobenumfanges, eine Vielzahl von zusätzlichen, frei wählbaren, linearen und nichtlinearen Funktionen der Regressoren berechnet werden, und damit eine Zwischenmatrix X mit N Zeilen, wobei N viel größer als L ist, und gleicher Spaltenzahl erzeugt wird, womit die Kovarianzmatrix XX' berechnet wird,
- daß aus der Kovarianzmatrix die Korrelationsmatrix berechnet und die Diagonalelemente mit Hilfe der einzelnen Regressorvarianzen korrigiert werden,
- daß mit der Kovarianzmatrix das Regressionmodell, für die als abhängig erklärte Variable, mittels eines rekursiven Verfahrens berechnet wird, der für eine Rekursionsebene p mehrere Schritte beinhaltet, und zwar

- daß zunächst die Regressoren ermittelt werden, die einen geringen Beitrag zum Modell haben, um sie aus dem Modell zu entfernen und für die weiteren Rekursionsebenen zu sperren, wobei falls es solche Regressoren gibt, die Rekursionsmatrix und die Diagonalelemente und die abhängige Spalte der Regressionsmatrix für die Rekursionsebene p neu berechnet werden müssen,
- daß die Regressoren die sich innerhalb des Kollinearitätskegels des Regressionsraumes befinden gesperrt werden,
- daß mittels F-Test der signifikanteste Regressor aus den verbliebenen gesucht wird,
- daß bei erfolgloser Suche, die Residuenvarianz durch das aktuelle Modell, zur Klassifikation dieses Modells zwischen den besten Q genutzt wird, mit Hilfe der Residuenvarianzen der bereits gefundenen Modelle, wobei wenn die Residuenvarianz kleiner oder gleich mit der größten abgespeicherten Residuenvarianz, oder zur Zeit weniger als Q Modelle gefunden wurden, die Residuenvarianz, die Regressommem und -koeffizienten gespeichert werden, und wobei in Anschluß daran, die Rekursionsebene p-1 angewählt wird,
- daß bei einer erfolgreicher Suche, der Satz der Regressoren ermittelt wird, die sich innerhalb des Kollinearitätskegels des besten Regressors befinden,
- daß nacheinander jeder dieser Regressoren einzeln im Modell aufgenommen wird, während die restlichen, zum kollinearen Satz gehörenden, gespent bleiben, und unter der Voraussetzung, daß keines der bereits ermittelten Regressionskoeffizienten ein Vorzeichenwechsel erfährt, werden die Zeilen der Rekursionsmatrix für den neuen Regressor und die neuen Diagonalelemente und abhängige Spalte berechnet und die Rekursionsebene p+1 angewählt,
- daß nach der Bearbeitung der kollinearen Regressoren in die Rekursionsebene p-1 gewechselt wird.

9. Verfahren nach Anspruch 8) zur Überwachung eines technischen Prozesses oder von Schwingungen einer Maschine oder Bauteilen davon, insbesondere Maschinen mit rotierenden Bauteilen, unter Verwendung von Sensoren zur Messung von Überwachungsvariablen, und von Parametem, die den Prozeß/Lastzustand/relative Positionen der Bauteile beschreiben, sowie einer Meßdatenverarbeitungsanlage, die einem Rechner zeitgleich die Werte der Überwachungsvariablen und der Parameter, Regressoren genannt, in digitaler Form zur Verfügung stellt, dadurch gekennzeichnet,

daß nach einer Normalzustandsprüfung und einer Prüfung auf Vollständigkeit im Regressorenraum, bei Auftreten neuer Betriebszustände für die jeweilige Überwachungsvariable eine individuelle Modellbildung neu gestartet wird, Lemphase genannt, soweit keine Alarme anstehen,

daß im Falle eines neuen Betriebszustandes aus den aktuellen Meßwerten der Überwachungsvariablen und der durch den Funktionengenerator vorgegebenen, beliebigen, linearen und nichlinearen Parameterfunktionen , eine auf den letzten Stand gebrachte und somit Lemwerte enthaltende Kovarianzmatrix gebildet wird, und die neuen Regressionsmodelle nach KESSR ermittelt werden,

daß im Falle eines bereits gelernten Betriebszustandes eine Modellbildung mittels des gleichen Verfahrens zu Kontrollzwecken durchgeführt wird, wobei die in der Lemphase bereits ermittelten, signifikanten Parameterfunktionen berücksichtigt werden,

daß mit den ermittelten Koeffizienten und Parameterfunktionen, eines oder mehrerer der zur Verfügung stehenden Q Regressionsmodelle, oder eines Prozessmodells der durch die Ausnutzung der Redundanz der Q Regressionsmodelle erhalten wird, aus den Parametermeßwerten ein Schätzwert/mehrere Schätzwerte der Überwachungsvariablen gebildet wird/werden, der/die vom aktuellen Meßwert der Überwachungsvariablen abgezogen wird

und daß dieses Residuum/diese Residuen als neue Überwachungsvariable, besonders zu Alarmzwecken, herangezogen wird/werden.

und daß neu hinzukommende oder abgehende Parameterfunktionen und/oder Beitragsänderungen der alten Parameterfunktionen zu Alarmmeldungen und Schadens- und/oder Prozeß-Diagnose herangezogen werden.

10. Verfahren nach einem der Ansprüche 8 bis 9, dadurch gekennzeichnet,

daß das Residuum der Überwachungsvariable einer Stellvorrichtung zugeführt wird, die eine oder mehrere Prozeßeingangsgrößen verändern kann, zwecks Regelung des Prozesses.

**Claims**

1. Device for carrying out consistent, expanded, fast and collinearity-free multiple regression in recursive form, for the purpose of the analysis or control of a technical process, comprising :

a processor (2) calculating the best Q regression models from data in a memory for the correlation matrix (123) which can be obtained via the unit for correlation calculation (132) from the memory (122) for the covariance matrix, and the memory for the regressor variances (115) entered or calculated beforehand, which are utilized for correction of the diagonal elements of the correlation matrix, and

that the regression models are classified in terms of their residue variance by the regression unit (102) of the processor (2), which is bus-controlled by the control and addressing unit (101), the residual variance of the model, regressor numbers and coefficients being deposited in the memory (116) provided for that purpose, and

that a locking memory (110), a memory for the diagonal elements and the dependent column of the regression matrix (111), a memory for the recursion matrix (113) with the offset-memory (112) belonging to it and a memory for the regression numbers (114) are provided for the realization of the recursive method, and

that the regression unit (102) must perform several actions for the recursion level p, including

that first of all those regressors are determined which make a small contribution to the model, and if necessary the excluded regressors are locked (110), the offset for the recursion matrix is stored (112), the regressor rows of the new recursion matrix (113) and the new diagonal elements and the dependent column (111) are calculated, and the residual regressor numbers (114) stored,

that those regressors, located within the collinearity cone of the current model, are determined and locked (110) with the help of the data from the memory for the regressor variances (115),

that the most significant regressor from those remaining is searched, i. e. that regressor is selected which yields the model with the smallest residual variance and at the same time passes the F test known from statistics, and

that, in the event of an unsuccessful search, the residual variance of the current model is utilized for the classification of this model between the best Qs, with the help of the residual variances of the models (116) already found, in which case, if the residual variance is smaller or equal to the largest stored residual variance, or currently less than Q models were found, the residual variance, the regression numbers and coefficients are stored in memory for the best models (116), and thereafter the regression unit (102) returns to the recursion level p-1, and its context is loaded from the corresponding memories (110 through 114),

- that, in the event of a successful search for a significant regressor, the group of regressors within the collinearity cone of the best regressor is found with the values of the regressor variances (115),
- that each of these regressors is incorporated into the model individually, one after the other, while the remaining ones from the collinear group remain locked (110), and with the precondition that none of the regression coefficients already found undergoes a sign change, the rows of the recursion matrix (113) for the new regressor and the new diagonal elements and the dependent column (111) are calculated and the recursion level p+1 selected,
- that, after processing of the collinear regressors, the change is made to the recursion level p-1, its context being loaded from the corresponding memories (110 through 114).

2. Circuit arrangement according to claim 1 wherein several regression units with associated memories operate in parallel.

3. Circuit arrangement according to claim 1 wherein several regression units with associated memories operate in parallel in several planes, the number of the regression units in the lower planes can increase.

4. Device according to claim 1, for monitoring a technical process or of oscillations of a machine or components of the same, especially machines with rotating parts, with the use of sensors for the measurement of monitoring variables, and of parameters which describe the process/loading state/relative positions of the components of the monitored machine, and by modelling the parameter behavior of the monitoring variables by means of consistent, expanded, fast and collinearity-free multiple regression in recursive form, characterized by the fact

- that a measurement recording unit (A) is provided for the recording of the monitoring variables and a process data logging system (B) for the recording of the parameters,
- that a bus-controlled monitoring unit (C) is connected to the computer (5) along with the measurement recording unit (A) and the process logging system (B),
- that the monitoring unit (C) exhibits a control and state analysis unit (1), which, with the aid of the data in the operating-state control memory (11), has the following tasks :

    a) Checking the operating state : in case of normal state, see under b), otherwise it triggers an alarm and stores it in the alarm memory (51),
    b) if new, not yet learned operating states occur, it initiates formation of a new model in the regression unit (2), called a learning phase, if no alarms are present in the alarm memory (51), and then it updates the operating-state control memory (11),
    c) initiates the formation of a control model in the regression controll unit (3), if an already learned operating state is present,

- that the new Q models are calculated according to the CEFSR process in the regression unit (2), and the coefficient and function-number memory (116) is updated, in doing so the associated function generator (131) makes available a large number N, with N much larger than L, of additional, freely selectable, linear and nonlinear regressor functions from the data of the L input channels, and the associated covariance matrix (122) and correlation matrix (123) memories are updated,
- that the formation of the control model is carried out according to the CEFSR method in the regression controller unit (3), employing the parameter functions from the coefficient and function number memory (116) determined in the regression unit (2), as well as the current measurement data, in doing so a function generator (131) identical with that in the regression unit (2) is used for calculation of the values in the control-covariance matrix memory (31), and thereafter the model coefficients and function numbers obtained are stored in the ring memory (32) for the purpose of detecting trend developments in the Q models,
- that first of all the Q estimates of the monitor variables, or estimate of a process model obtained by utilisation of the redundancy of the Q regression models, are calculated in the predictor and comparator unit (4), then the residues of the monitoring variables and/or the contributions of the individual parameters are formed and, with the fulfillment of various alarm criteria, such as threshold crossings, as well as model changes, alarm messages are formed, which are stored in the alarm memory (51) and employed for failure and/or process diagnosis,
- and that the computer (5) takes on the visualisation of the residues and model change(s) with the help of the data in the ring memory (32) as well as the processing or forwarding of the alarms present in the alarm memory (51).

5. Circuit arrangement according to claims 1,2 or 3, characterized by the fact

- that, from the memory (121) of the input matrix U with L rows corresponding to the number of the input channels and V columns corresponding to the size of the sample, a number of additional, freely selectable, linear and nonlinear functions are made available as new regressors by the function generator (131), and thus a preliminary matrix X is generated with N rows, N being much larger than L, and the same column number, with which the covariance matrix XX' is calculated, and

- that the determined Q regression models, or a process model, obtained by utilizing the redundancy of the Q regression models, is employed for the control or analysis of a process.

6. Device according to claim 4, characterized by the fact

- that the residue of the monitoring variable is fed to an adjustment device, capable of changing one or more processing input values, for the purpose of regulating the process.

7. Device according to one of the claims 1,2,3 or 4 , characterized by the fact

- that the performance characteristics of the circuit arrangements are realized on a computer or in parallel-computer architecture.

8. Method for the analysis or control of a technical process with the aid of regression models, which are calculated in recursive form by means of consistent, expanded, fast and collinearity-free multiple regression, in short CEFSR, for the variables relevant to the process, as a function of other parameters describing or influencing the process, termed regressors, characterized by the fact

- that a number of supplementary, freely selectable, linear and nonlinear functions of the regressors are calculated from the entry matrix U with L rows corresponding to the number of input channels and V columns corresponding to the size of the sample, and thus a preliminary matrix X is generated with N rows, with N much greater than L, and the same number of columns as U, which is used to calculate the covariance matrix XX',
- that the correlation matrix is calculated from the covariance matrix and the diagonal elements are corrected with the help of the individual regressor variances,
- that a regression model for the variable declared as dependent is calculated with the correlation matrix by means of a recursive method containing following steps for one recursion level

- that first of all that regressors are determined, which make a small contribution to the model, in order to remove them from the model and lock them for the further recursion levels, in which case, if there are such regressors, the recursion matrix as well as the diagonal elements and the independent column of the regression matrix must be calculated anew for recursion level p,
- that the regressors located inside the collinearity cone of the regression space are locked,
- that the most significant regressor from the remaining ones is found by means of the F test,
- that, in the event of an unsuccessful search, the residual variance is used by the current model for the classification of this model between the best Qs, with the aid of the residual variances of the models already found, in which case, if the residual variance is smaller or equal to the largest stored residual variance, or at present fewer than Q models were found, the residual variance, the regressor numbers and coefficients are stored, and where, as the next step, the recursion level p-1 is selected,
- that, when the search is successful, the set of regressors is determined, which lie within the collinearity cone of the best regressor,
- that each of these regressors is incorporated into the model individually, in sequence, while the others, belonging to the collinear set, are locked and, with the precondition that none of the regression coefficients already determined has undergone a sign change, the rows of the recursion matrix for the new regressor and the diagonal elements and the independent column is calculated and the recursion level p+1 selected,
- that, after the processing of the collinear regressors, a change is made to recursion level p-1.

9. Method according to claim 8 for monitoring a technical process or the vibrations of a machine or structural parts of the same, especially a machine with rotating parts, with the use of sensors for the measurement of monitoring variables and of parameters describing the process/loading state/relative positions of the parts, as well as of a measurement-data processing unit, which makes the values of the monitoring variables and of the parameters, called regressors, simultaneously available in digital form to a computer, characterized by the fact

- that an individual model formation is begun anew with the occurrence of new operating states for the respective monitoring variables after checking for a normal state and a checking for completeness in the regressor space, if no alarms are present,

- that, in the case of a new operating state, an updated covariance matrix, thus containing learning values, is formed from the current measurement values of the monitoring variables and with the either linear or nonlinear parameter functions produced by the function generator, new regression models are determined according to CEFSR,

- that, in the case of an already learned operating state, a control model computation is carried out by means of the same method, in which case the significant parameter functions, already determined during the learning phase, are taken into account,

- that an estimate/several estimates of the monitoring variables are derived from the parameter measurements with the coefficients or parameter functions determined, of one or more of the available Q regression models, or of a process model obtained by use of the redundancy of the Q regression models, and this/these estimate (s) is/are subtracted from the actual measured value of the monitored variable and

- that this/these residue(s) is /are taken into consideration as new monitoring variables, especially for alarm purposes and

- that new or leaving parameter functions and/or contribution changes of the old ones are used to form alarm messages and for failure and/or process diagnosis.

10. Method according to one of the claims 8 or 9, characterized by the fact,

- that the residue of the monitoring variable are passed to a adjustment device which can change one or more process input variables for the purpose of regulating the process.


**Revendications**

1. dispositif pour l'execution de la régression multiple consistante, élargie, rapide et sans regresseurs colinéaires dans une forme récursive pour l'analyse ou le côntrole d'un processus, characterisé en ce,

- que le processeur (2) calcule les meilleurs modèles Q de régression, en utilisant d'une part les données de la mémoire pour la matrice de corrélation (123), qui peut être gagnée par l'unité (132) pour la calculation de la correlation, qui de sa part utilise les données de la mémoire (122) pour la matrice de covariance, et d'autre part les données préfixées ou calculées à préalable de la mémoire pour les variances des régresseurs (115), qui sont utilisées à la correction des éléments diagonaux de matrice de corrélation, et

- que l'unité pour la régression (102) du processeur (2), qui est contrôlée par l'unité (101) pour adressage et commande, clasifie les modèles de régression en utilisant leur variance résiduelle, qui sont deposés dans la mémoire (116) de même que les numéros d'identification des régresseurs et les coefficients correspondantes, et

- que pour la réalisation de la méthode récursive il est prévu, une mémoire de barrage (110), une mémoire pour les éléments diagonaux et la colonne dépendante de la matrice de régression (111), une mémoire pour la matrice de récursion (113) avec une mémoire associée pour l'écart (112), et une mémoire pour les numéros d'identification des régresseurs (114), et

- que pour un plan de récursion p, l'unité pour la régression (102) devra faire plusieurs actions, et cela,

- qu'avant tout, à l'aide d'éléments diagonaux et de la colonne dépendante (111) ainsi que des numéros d'identification des régresseurs (114), ces régresseurs sont determinés, qui ont une contribution négligeable et, si applicable, les régresseurs éliminés sont barrés(110), l'écart pour la matrice de récursion est deposé (112), les lignes des régresseurs de la nouvelle matrice de récursion(113) et les nouveaux éléments diagonaux et la colonne dépendante (111) sont calculés, et les numéros d'identification des régresseurs restants (114) sont stockés,

- que, les régresseurs qui se trouve dans le cône de colinéarité du modèle actuel sont determinés avec les données de la mémoire pour les variances des régresseurs (115), et barrés (110)

- que le régresseur le plus signifiante des régresseurs restants est choisi, c'est-à-dire celui sera choisi, qui doit rendre le modèle avec la variance résiduelle minimum et en même temps il doit passer le test F connu dans la statistique, et

- que, après une recherche sans succès, la variance résiduelle du modèle actuel est utilisée pour la classification du modèle parmi les meilleurs Q, et cela en utilisant les variances résiduelles des modèles déjà trouvés (116), à l'occasion duquel, si la variance résiduelle du modèle actuel est moindre où égale à la plus grande variance résiduelle stockée, ou si le nombre Q n'est pas atteint, la variance résiduelle, les numéros d'identification des régresseurs et les coefficients correspondants sont stockés dans la mémoire pour les meilleurs modèles (116), et à cela, l'unité pour la régression (102) retourne dans le plan de récursion p-1, et son contexte est récupéré des mémoires correspondantes (110 jusqu'à 114),

- qu'on utilise les variances des régresseurs (115), après qu'un régresseur signifiant a été trouvé, pour la détermination de l'ensemble des régresseurs, qui se trouve dans le cône de colinéarité du meilleur régresseur(le régresseur signifiant),

- qu'un après l'autre, chaqu'un des ces régresseurs est admis seulement dans le modèle, pendant que les autres, qui appartiennent à l'ensemble colinéaire, restent barrés (110), et supposé que nul coefficient déjà obtenu change son signe, les lignes de la matrice de récursion (113) pour le nouveau régresseur et les nouveaux éléments diagonaux comme la colonne dépendante (111) sont calculés et le plan de récursion p+1 est choisi,

- que le plan de récursion p-1 est choisi après le traitement des régresseurs colinéaires, et son contexte est récupéré des mémoires correspondantes (110 jusqu'à 114).

2. Montage selon la revendication 1, characterisé en ce ,

- que plusieurs unités pour la régression (102) avec mémoire correspondante sont actionnées en parallèle.

3. Montage selon la revendication 1, characterisé en ce,

- que plusieurs unités pour la régression (102) avec mémoire correspondante dans plusieurs plans sont actionnées en parallèle, et le nombre des unités pour la régression (102) peut aggrandir dans les plans plus bas.

4. dispositif selon la revendication 1 pour la surveillance d'un processus ou des vibrations d'un appareil ou de ses éléments de construction, spécialement des appareils avec pièces constructives tournantes, en utilisant des capteurs pour la mesure des variables de surveillance et des paramètres qui décrivent le processus /la condition de la charge/les positions relatives des pièces constructives d'appareil surveillé, en utilisant la régression multiple dans la forme récursive, consistante, élargie, rapide et sans regresseurs colinéaires pour la calculation des modèles des variables de surveillance comme fonction des paramètres, characterisé en ce,

- qu'ils sont disponible, pour l'enregistrement des variables de surveillance une installation de mesure(A) et pour les paramètres une appareil de consignation d'information (B)
- que l'installation de mesure (A) et l'appareil de consignation d'information (B) sont connectés avec une unité de contrôle(C) et un ordinateur (5),

- que l'unité de contrôle(C) a une unité pour commande et l'analyse de la condition de service (1), qui en utilisant les données de la mémoire pour le contrôle des conditions de service (11) a les devoirs suivants :

a)contrôle de la conditon de service; en cas de condition de service normale il faut continuer avec b) autrement une alerte doit être donée et deposée dans la mémoire d'alerte (51) ,

b)si des nouvelles conditions de service apparaissent, un nouveau développement de modèle est démarré dans l'unité pour la régression (2), nommé stade d'apprentissage, s'il n'y a pas d'alarmes dans la mémoire d'alerte (51) et par la suite, la mémoire pour le contrôle de conditon de service (11) est mis à jour,

c)si une conditon de service déjà apprise est présente, un développement de modèle dans l'unité-contrôle pour la régression (3) est démarré,

- que dans l'unité pour la régression (2) les nouveaux modèles Q sont calculés après la méthode CERPR, et la mémoire pour les numéros d'identification et pour les coefficients des régresseurs (116) est mis à jour, et le générateur des fonctions (131) appartenant à l'unité pour la régression, produit un grand nombre N des fonctions supplémentaires, linéaires et non-linéaires à libre choix, en utilisant les données des signaux d'entrée L, avec N plus grand que L, et avec cela les mémoires pour la matrice de covariance (122) et la matrice de corrélation (123) sont mis à jour,

- que le développement de modèle de contrôle dans l'unité-contrôle pour la régression (3) est donné après la méthode CERPR, en utilisant les numéros d'identification et les coefficients des régresseurs (116) qui sont déjà obtenus par l'unité pour la régression (2) aussi bien que les valeurs mesurées à l'emploi d'un générateur de fonctions (131) identique avec celui utilisé dans l'unité pour la régression (2), qui est nécessaire pour la calculation des valeurs de la mémoire matrice-contrôle de covariance (31), et les numéros d'identification ainsi que les coefficients des régresseurs obtenus sont stockés dans la mémoire en anneau (32) en vue de la reconnaissance des développements dans les modèles Q,

- que l'unité d'appréciation et comparaison(4), calcule en premier lieu les valeurs d'appréciation Q des variables de surveillance, ou la valeur d'appréciation d'un modèle de processus, qui est obtenu à l'emploi du redondance des modèles de régression Q, ensuite calcule les résidus des variables de surveillance et/ou des contributions des différents paramètres, et à la réalisation des diverses critères d'alarme, comme dépassements des valeurs limite, aussi bien que changements de/s modèle/s, des messages d'alarme sont formés et sont deposés dans la mémoire d'alerte (51) et utilisés pour le diagnostique d'une avarie et/ou d'un processus,

- et qu'un ordinateur (5) prend la tâche de présentation des résidus et changements de/s modéle/s avec des données de la mémoire en anneau (32) aussi bien que le traitement ou la transmission d'alarmes qui sont présents dans la mémoire d'alerte (51).

5.  Montage selon les revendications 1 à 3, characterisé en ce,

- que de la mémoire (121) pour la matrice d'entrée U avec lignes L correspondant au nombre des signaux d'entrée et colonnes V conformément à l'étendue d'échantillon, le générateur des fonctions (131) produit un grande nombre N, avec N plus grand que L, des fonctions supplémentaires, linéaires et non-linéaires à libre choix, et calcule avec ces fonctions une matrice intermédiaire X avec lignes N et colonnes V, nécessaire à la calculation de la matrice de covariance XX', et

- que les modèles de régression évalués Q, ou un modèle du processus, qui est obtenu à l'emploi du redondance des modèles de régression Q, sont utilisés pour le contrôle ou l'analyse d'un processus.

6.  dispositif selon la revendication 4, characterisé en ce,

- que le résidu de la variable de surveillance est amené à un organe de réglage, qui peut modifier un ou plusieurs signaux d'entrée, en vue de régler le processus.

7.  dispositif selon une des revendications 1 à 4, characterisé en ce,

- que les caractéristiques des montages sont realisés sur un ordinateur respectivement une calculatrice digitale parallèle.

8.  Procédé pour l'analyse ou contrôle d'un processus, au moyen des modèles de régression, qui sont calculés dans une forme récursive à l'aide de la régression multiple, consistante, élargie, rapide et sans regresseurs colinéaires, abrégé CERPR, pour grandeurs diverses, importants au processus, comme fonction d'autres paramètres, nommés régresseurs, qui décrivent ou influencent le processus, characterisé en ce,

- que de la matrice d'entrée U avec lignes L correspondant au nombre des signaux d'entrée et colonnes V conformément à l'étendue d'échantillon, un grande nombre N, avec N plus grande que L, des fonctions supplémentaires, linéaires et non-linéaires à libre choix, sont calculées, et une matrice intermédiaire X avec lignes N et colonnes V est calculée, nécessaire a la calculation de la matrice de covariance XX', et

- que de la matrice de covariance, la matrice de corrélation est calculée et les éléments diagonaux sont corrigés à l'aide des variances des régresseurs correspondantes,

- que, de la matrice de corrélation, le modèle de régression est calculé pour la variable qui a été déclarée comme dépendante, à l'aide d'un méthode récursive, qui contient pour un plan de récursion p plusieurs pas, et cela

- qu'avant tout, les régresseurs sont determinés et par la suite éliminés et barrés pour les plans de récursion suivants, qui ont une contribution négligeable au modèle, et, si applicable, la matrice de récursion, les éléments diagonaux et la colonne dépendante sont calculés de nouveau pour le plan de récursion p,

- que les régresseurs qui se trouvent dans le cône de colinéarité de l'espace de régression sont barré,

- que, des régresseurs restants, le plus signifiant régresseur est choisi à l'aide du test F,

- qu'après une recherche sans succès, la variance résiduelle du modèle actuel est utilisée pour la classification du modèle parmi les meilleurs Q, et cela en utilisant les variances résiduelles des modèles déjà trouvés, à l'occasion duquel, si la variance résiduelle du modèle actuel est moindre où égale à la plus grande variance résiduelle stockée, où si le nombre Q n'est pas atteint, la variance résiduelle, les numéros d'identification des régresseurs et les coefficients correspondants sont stockés, et à cela, on retoume dans le plan de récursion p-1,

- qu'après un régresseur signifiant a été trouvé, l'ensemble des régresseurs est determiné, qui se trouve dans le cône de colinéarité du meilleur régresseur(le régresseur signifiant),

- qu'un après l'autre, chaqu'un des ces régresseurs est admis seulement dans le modèle, pendant que les autres, qui appartiennent à l'ensemble colinéaire, restent barrés, et supposé que nul coefficient déjà obtenu change son signe, les lignes de la matrice de récursion pour le nouveau régresseur et les nouveaux éléments diagonaux comme la colonne dépendante sont calculés et le plan de récursion p+1 est choisi,

- qu'après le traitement des régresseurs colinéaires, le plan de récursion p-1 est choisi.

9. Procédé selon la revendication 8 pour la surveillance d'un processus ou des vibrations d'un appareil ou de ses éléments de construction, spécialement des appareils avec pièces constructives tournantes, en utilisant des capteurs pour la mesure des variables de surveillance, et des paramètres qui décrivent le processus /la condition de la charge/les positions relatives des pièces constructives d'appareil surveillé, aussi bien qu'une installation de mesure qui pose à la disposition d'un ordinateur en même temps les valeurs des variables de surveillance et des paramètres, nommés régresseurs, dans une forme digitale, characterisé en ce,

- qu'après une contrôle de la conditon de service normale et d'intégralité dans l'éspace de régression, si de nouvelles conditions de service apparaissent, un nouveau développement de modèle est démarré pour la variable de surveillance respective, nommé stade d'apprentissage, si aucune alarme est présente,
- que, dans le cas d'une nouvelle condition de service, on calcule, avec les valeurs mesurées actuels des variables de surveillance, et avec les fonctions des paramètres, linéaires et non-linéaires à libre choix, qui sont produites par le générateur des fonctions, une matrice de covariance, contenant des valeurs d'apprentissage mis à jour, et puis les nouveaux modèles de régression seront calculés après CERPR,
- que, dans le cas d'une conditon de service déjà appris, une développement de modèle pour but de contrôle est démarré, en utilisant la même méthode, où on considére les fonctions signifiantes des paramètres, qui sont déjà calculées au stade d'apprentissage,
- qu'on forme à l'aide des valeurs mesurées des paramètres, avec les coefficients et les fonctions des paramètres trouvées d'un ou plusieurs des modèles de régression Q à la disposition, ou d'un modèle du processus qui est obtenu en utilisant la redondance des modèles de régression Q, un/plusieurs valeur/s estimée/s du variable de surveillance, qui est/sont soustraite/s du valeur mesurée actuel du même variable
- et que ce/ces résidu/s est/sont utilisé/s comme une/des nouvelle/s variable/s de surveillance, avant tout en vue d'alerte,
- et que les fonctions des paramètres venant en plus ou quittant le modèle et/ou les changements de contribution des vieilles fonctions des paramètres sont utilisées pour messages d'alerte et utilisés pour le diagnostique d'une avarie et/ou d'un processus.

10. Procédé selon une des revendications 8 à 9, characterisé en ce,

- que le résidu du variable de surveillance est appliqué à un servo-mécanisme, qui peut changer un ou plusieurs signaux d'entrée, en vue de régler le processus.

$Y = a\ X_1 + c_1 \qquad a > 0$

$Y = b\ X_2 + c_2 \qquad b > 0$

Fig. 1

$a_1 < 0 \; ; \; |a_1| > a \qquad\qquad b_1 > b > 0$

Fig. 2

Fig. 3

Fig. 4

Fig. 5

Fig. 6

| | | | | | | | |
|---|---|---|---|---|---|---|---|
| 1 | $j_1$ | $S_{1,j_1}$ | $S_{2,j_1}$ | $S_{3,j_1}$ | .... $S_{j_1,j_1}$ | .... | $S_{y,j_1}$ |
| | | $s_{1,j_1}$ | $s_{2,j_1}$ | $s_{3,j_1}$ | .... $1$ | .... | $s_{y,j_1}$ |
| 2 | $j_2$ | $S_{1,j_2}^{j_1}$ | $S_{2,j_2}^{j_1}$ | $S_{3,j_2}^{j_1}$ | .... | .... | $S_{y,j_2}^{j_1}$ |
| | | $s_{1,j_2}^{j_1}$ | $s_{2,j_2}^{j_1}$ | $s_{3,j_2}^{j_1}$ | .... | .... | $s_{y,j_2}^{j_1}$ |
| .... | .... | .... | .... | .... | .... | .... | .... |
| .... | .... | .... | .... | .... | .... | .... | .... |
| p | $j_p$ | $S_{1,j_p}^{j_{p-1}\ldots j_2 j_1}$ | $S_{2,j_p}^{j_{p-1}\ldots j_2 j_1}$ | $S_{3,j_p}^{j_{p-1}\ldots j_2 j_1}$ | .... | .... | $S_{y,j_p}^{j_{p-1}\ldots j_2}$ |
| | | $s_{1,j_p}^{j_{p-1}\ldots j_2 j_1}$ | $s_{2,j_p}^{j_{p-1}\ldots j_2 j_1}$ | $s_{3,j_p}^{j_{p-1}\ldots j_2 j_1}$ | .... | .... | $s_{y,j_p}^{j_{p-1}\ldots j_{2'}}$ |
| 1 | $j_1$ | $S_{1,j_1}$ | $S_{2,j_1}$ | $S_{3,j_1}$ | .... $S_{j_1,j_1}$ | .... | $S_{y,j_1}$ |
| | | $s_{1,j_1}$ | $s_{2,j_1}$ | $s_{3,j_1}$ | .... $1$ | .... | $s_{y,j_1}$ |
| 2 | $j_3$ | $S_{1,j_3}^{j_1}$ | $S_{2,j_3}^{j_1}$ | $S_{3,j_3}^{j_1}$ | .... | .... | $S_{y,j_3}^{j_1}$ |
| | | $s_{1,j_3}^{j_1}$ | $s_{2,j_3}^{j_1}$ | $s_{3,j_3}^{j_1}$ | .... | .... | $s_{y,j_3}^{j_1}$ |
| .... | .... | .... | .... | .... | .... | .... | .... |
| .... | .... | .... | .... | .... | .... | .... | .... |
| p-1 | $j_p$ | $S_{1,j_p}^{j_{p-1}\ldots j_3 j_1}$ | $S_{2,j_p}^{j_{p-1}\ldots j_3 j_1}$ | $S_{3,j_p}^{j_{p-1}\ldots j_3 j_1}$ | .... | .... | $S_{y,j_p}^{j_{p-1}\ldots j_3}$ |
| | | $s_{1,j_p}^{j_{p-1}\ldots j_3 j_1}$ | $s_{2,j_p}^{j_{p-1}\ldots j_3 j_1}$ | $s_{3,j_p}^{j_{p-1}\ldots j_3 j_1}$ | .... | .... | $s_{y,j_p}^{j_{p-1}\ldots j_{3'}}$ |
| .... | .... | .... | .... | .... | .... | .... | .... |
| .... | .... | .... | .... | .... | .... | .... | .... |

Fig. 7

24

Fig. 8

EP 0 676 070 B1

Fig. 9